# EUROPEAN PATENT APPLICATION

(11) **EP 1 172 940 A2**
(43) Date of publication of application: **16.01.2002**
(21) Application number: 01306001.7
(22) Date of filing: 12.07.2001
(51) Int. Cl.: H04B 1/40

(54) **Multi-band transmission & reception-signal-generating apparatus**

(30) Priority: 13.07.2000 JP 2000213253
(71) Applicant: SONY CORPORATION, Tokyo 141 (JP)
(72) Inventor: Takagi, Kotaro, Shinagawa-Ku, Tokyo 141 (JP)
(74) Representative: Turner, James Arthur

(57) **Abstract**

In a WCDMA mode, a mixer employed in a GSM/DCS orthogonal-modulation unit outputs a frequency of 380-MHz obtained as a result of division of a frequency generated by a fixed PLL loop unit by 2 without frequency transformation. The frequency of 380-MHz is further divided by 2 by a frequency divider to give a reference frequency of 190 MHz which is then supplied to a phase comparator employed in an offset PLL loop unit. In the offset PLL loop unit, on the other hand, an oscillation signal generated by a VCO for WCDMA use is mixed by a mixer with the oscillation signal generated by another VCO to give a frequency equal to a difference obtained as a result of subtraction of the oscillation frequency of the VCO for WCDMA use from the oscillation frequency of the other VCO. The difference-frequency signal output by the mixer is filtered by an LPF before being supplied to the phase comparator to be compared with the signal with the frequency of 190 MHz. Thus, the loop converges the oscillation frequency of the VCO for the WCDMA use to a value equal to a difference obtained as a result of subtraction of 190 MHz from the oscillation frequency of the other VCO.

## Description

The present invention relates to a multi-band transmission & reception-signal-generating apparatus, a multi-band transmission & reception-signal-generating method and a multi-band-radio-signal-transmitting & receiving apparatus,

A GSM (Global System for Mobile Communication) terminal and a DCS (Digital Cellular System) terminal adopt a GMSK (Gaussian-filtered minimum shift keying) technique as a modulation system. The GSM terminal is a European hand-phone and the DCS terminal is a personal mobile communication system used in Europe. The GMSK technique is a narrow-band MSK method limiting the band by using a Gauss filter as a communication base-band filter.

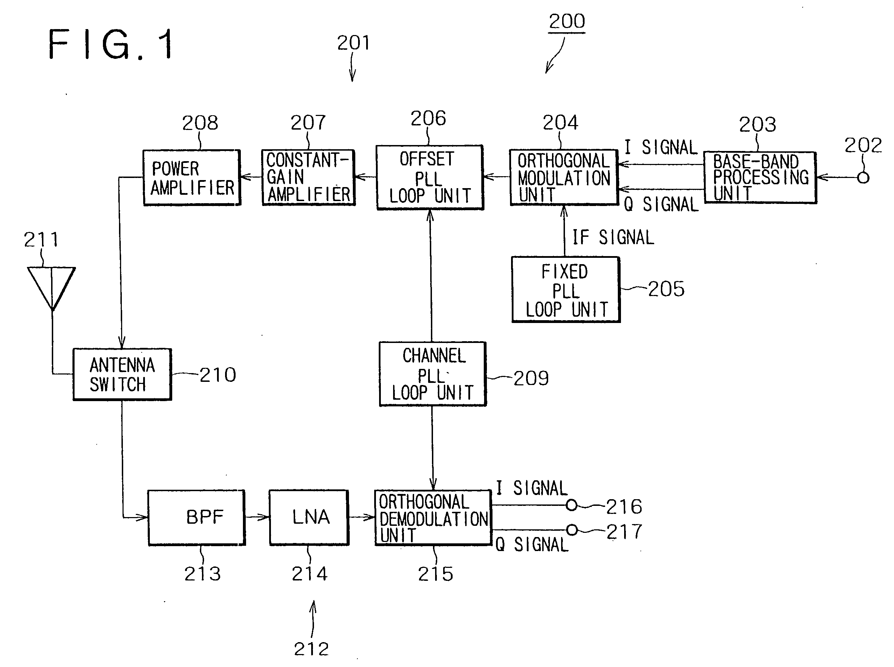

FIG. 1 is a block diagram showing the configuration of the conventional GSM terminal 200. The GSM terminal 200 processes transmitted and received signals in the 900-MHz band. On the other hand, the DCS terminal processes transmitted and received signals in the 1,800-MHz band. However, the GSM terminal 200 and the DCS terminal have configurations all but identical with each other.

First of all, a transmission system 201 is described. Data to be transmitted is generated at a data-generating unit not shown in the figure and supplied to a base-band processing unit 203 through an input terminal 202. The base-band processing unit 203 carries out phase modulation on the data to be transmitted to generate I and Q signals orthogonal to each other. The I and Q signals are supplied to an orthogonal-modulation unit 204. In the orthogonal-modulation unit 204, the I and Q signals are each mixed with an IF (intermediate frequency) signal generated by a fixed PLL loop unit 205 before being synthesized and supplied to an offset PLL loop unit 206. The offset PLL loop unit 206 generates an RF (radio frequency) signal of the 900-MHz band. The RF signal has completed orthogonal modulation. In the generation of the RF signal, the offset PLL loop unit 206 also receives a signal from a channel PLL loop unit 209 for generating a reception local oscillation signal to be described later. The channel PLL loop unit 209 also serves as an offset PLL (phase lock loop) frequency synthesizer. The RF signal generated by the offset PLL loop unit 206 is supplied to a constant-gain amplifier 207 for amplifying the RF signal at a predetermined gain. A signal amplified by the constant-gain amplifier 207 is then supplied to a power amplifier 208. After components in predetermined bands are filtered out by a BPF (bandpass filter) 218, a signal amplified by the power amplifier 208 is supplied to an antenna 211 by way of an antenna switch 210. The antenna 211 then broadcasts the transmitted signal to the air.

Next, a reception system 212 is described. An RF signal transmitted by a base station is received by a BPF 213 via antenna 211 and the antenna switch 210. The BPF 213 filters out some components of the received RF signal. A filtered signal output by the BPF 213 is amplified by an LNA (low-noise amplifier) 214 before being supplied to an orthogonal-demodulation unit 215. The orthogonal-demodulation unit 215 demodulates a signal amplified by the LNA 214 to generate an in-phase signal (I signal) and an orthogonal signal (Q signal). The orthogonal-demodulation unit 215 supplies the I and Q signals to output terminals 216 and 217 respectively. At that time, the orthogonal-demodulation unit 215 also receives the reception local oscillation signal used in the demodulation of the signal amplified by the LNA 214 from the channel PLL loop unit 209.

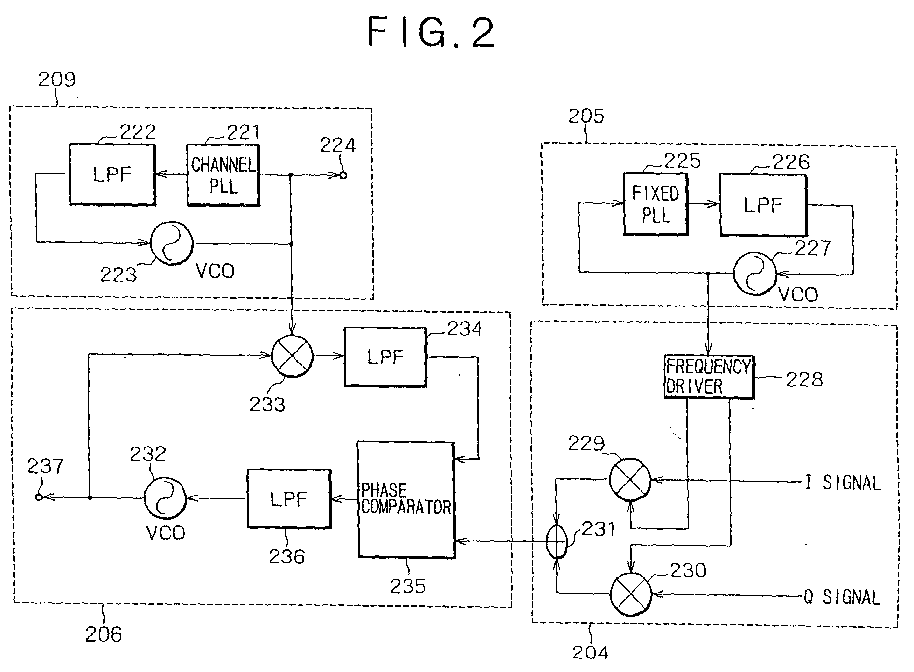

By referring to FIG. 2, the following describes the circuit of a PLL-system serving as a transmission & reception-signal generator for determining a transmission frequency for signal transmission use by the GSM terminal 200 and a reception local oscillation frequency for signal reception by the GSM terminal 200.

As shown in the figure, the PLL-circuit system includes the fixed PLL loop unit 205, the orthogonal-modulation unit 204, the offset PLL loop unit 206 and the channel PLL loop unit 209. The fixed PLL loop unit 205 generates an IF (intermediate frequency) by adopting a fixed PLL technique. The orthogonal-modulation unit 204 divides the IF generated by the fixed PLL loop unit 205 and then carries out orthogonal modulation in an IQ base band to output an orthogonal-modulation signal. The offset PLL loop unit 206 generates a transmission-frequency signal completing modulation based on the orthogonal-modulation signal output by the orthogonal-modulation unit 204. The channel PLL loop unit 209 is a frequency synthesizer for the offset PLL loop unit 206 and also generates the reception local oscillation frequency.

A detailed configuration of each component is described as follows. First of all, the channel PLL loop unit 209 includes a channel PLL 221, an LPF (low-pass filter) 222 and a VCO (voltage-controlled oscillator) 223. The channel PLL loop unit 209 generates a signal with a frequency suitable for reception or transmission. The signal is generated by the VCO 223 at a frequency adjusted to the frequency of a channel used by the GSM terminal 200. During transmission in this embodiment, a signal generated with a frequency in the range of 1,260 to 1,295 MHz is supplied to the offset PLL loop unit 206. During reception, on the other hand, an oscillation-frequency signal generated at a frequency in the range of 1,387.5 to 1,440 MHz is supplied to an output terminal 224 as the reception local oscillation signal.

The fixed PLL loop unit 205 comprises a fixed PLL 225, an LPF 226 and a VCO 227. The fixed PLL loop unit 205 generates an IF signal with a frequency of 760 MHz and supplies the signal to the orthogonal-modulation unit 204.

The orthogonal-modulation unit 204 includes a frequency divider 228, a first mixer 229, a second mixer 230 and an adder 231. First of all, the frequency divider 228 divides the 760-MHz frequency of the IF signal generated by the fixed PLL loop unit 205 by 2 to produce an IF signal with a frequency of 380-MHz. The IF signal with a frequency of 380-MHz is supplied to the first and second mixers 229 and 230 which receive I and Q signals respectively from the base-band processing unit 203. The first mixer 229 and the second mixer 230 carry out orthogonal modulation on the IF signal with a frequency of 380-MHz. Signals generated by the first mixer 229 and the second mixer 230 are supplied to the adder 231 for synthesizing the signals. A result of the synthesis is an orthogonal-modulation signal supplied to the offset PLL loop unit 206.

The offset PLL loop unit 206 comprises a VCO 232, a mixer 233, an LPF 234 and 235, and a phase comparator 235. The oscillation frequency of the VCO 232 is converged to a value equal to the oscillation frequency of the VCO 223 minus (the oscillation frequency of the VCO 227 / 2). Thus, the oscillation frequency of the VCO 232 oscillates between 880 MHz (= 1,260 MHz - 380-MHz) and 915 MHz (= 1,295 MHz - 380 MHz). Since the 380-MHz IF signal supplied by the orthogonal-modulation unit 204 to the phase comparator 235 has information on IQ phases, the signal generated by the VCO 232 is also subjected to phase modulation based on the IQ phases. Thus, the signal transmitted by the GSM terminal 200 is directly obtained from GMSK modulation. The circuit for generating a transmitted signal by using the offset PLL loop unit 206 is capable of generating a transmitted signal due to the fact that the GMSK modulation is modulation using information on a phase only.

On the other hand, in recent years, a CDMA (Code Division Multiple Access) technology or a WCDMA (Wideband Code Division Multiple Access) technology are drawing attention. The WCDMA technology is a powerful technology for a mobile communication system of the next generation. There is thus a desire for a multi-band-radio-signal-transmitting & receiving apparatus capable of utilizing a multi-band system comprising sub-systems of different types along with the GSM terminal and the DCS terminal. In the WCDMA technology, however, a modulation technique such as the HPSK method is typically adopted. Thus, if the GSM terminal 200 described above and a terminal of the multi-band system are taken into consideration, it is impossible to generate a transmission signal completing orthogonal modulation in the offset PLL loop unit 206. This is because the QPSK and HPSK techniques or the like produce a signal having information in its amplitude. It is self-evident that a signal output by the VCO 232 shown in FIG. 2 changes its phase only in concert with a voltage output by the phase comparator 235 and does not vary its amplitude at all.

Thus, in a multi-band-radio-signal-transmitting & receiving apparatus for rendering services of both the GSM/DCS terminal and the WCDMA terminal by melting different communication systems adopted in a single terminal, it is necessary to add a PLL-system circuit capable of carrying out transmission orthogonal modulation of the CDMA technology for another application besides the offset PLL loop unit 206 described above.

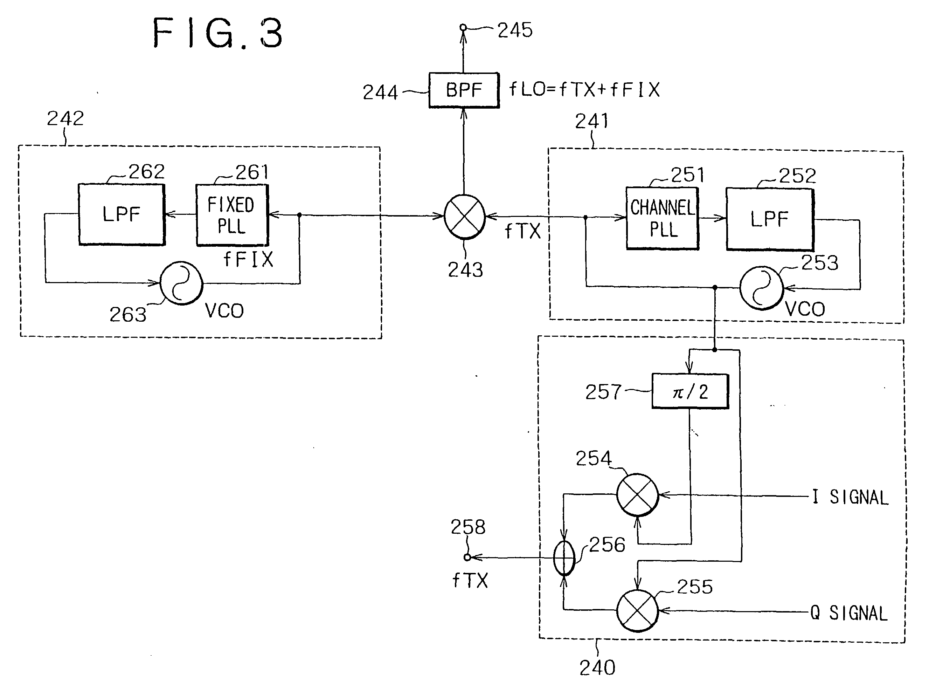

FIG. 3 is a block diagram showing a PLL-system circuit added to the circuit shown in FIG. 2 in a multi-band-radio-signal-transmitting & receiving apparatus. The circuit of the PLL system has an ordinary direct-modulation PLL configuration including an orthogonal-modulation unit 240, a channel PLL loop unit 241 and a fixed PLL loop unit 242. The channel PLL loop unit 241 is a PLL synthesizer for generating an RF signal with a transmission frequency for the orthogonal-modulation unit 240. In addition, the circuit of the PLL system also has a mixer 243 for mixing a signal generated by the channel PLL loop unit 241 at the transmission frequency with a signal output by the fixed PLL loop unit 242 and a BPF 244 for limiting the band of the mixed output generated by the mixer 243.

The channel PLL loop unit 241 includes a channel PLL 251, an LPF 252 and a VCO 253. As described above, the channel PLL loop unit 241 generates an RF signal with a transmission frequency for the orthogonal-modulation unit 240. The orthogonal-modulation unit 240 comprises a first mixer 254, a second mixer 255, an adder 256 and a π /2 phase shift circuit 257. An RF signal with the phase thereof shifted by the π/2 phase shift circuit 257 is supplied to the first mixer 254 employed in the orthogonal-modulation unit 240 and the RF signal with the phase not shifted is supplied to the second mixer 255. The first mixer 254 and the second mixer 255 also receive I and Q signals respectively from the base-band processing unit 203, carrying out orthogonal modulation on the RF signal. Signals output by the first mixer 254 and the second mixer 255 are synthesized by the adder 256 to generate a signal to be transmitted through an output terminal 258.

On the other hand, the fixed PLL loop unit 242 includes a fixed PLL 261, an LPF 262 and a VCO 263. The fixed PLL loop unit 242 generates a constant-frequency signal fFIX and outputs the signal to the mixer 243. The mixer 243 mixes the signal having the constant frequency fFIX with a signal generated by the channel PLL loop unit 241 with a frequency fTX and outputs a mixed signal to the BPF 244. As a result, the BPF 244 outputs a signal with a local oscillation frequency of fL0 (= fTX + fFIX) to an output terminal 245 as a signal with a local oscillation frequency where notations fFIX and fTX denote the oscillation frequencies of the VCO 263 and the VCO 253 respectively.

By the way, in the multi-band-radio-signal-transmitting & receiving apparatus of the WCDMA system and the GSM/DCS system, that is, a combination circuit including the PLL-system circuit shown in FIG. 2 and the PLL-system circuit shown in FIG. 3, the number of PLL circuits each including a VCO is doubled as is obvious from the above description. As a result, the size of the circuit design and the scale of the IC integration also increase as well.

Various respective aspects and features of the invention are defined in the appended claims.

Embodiments of the present invention can provide a multi-band transmission & reception-signal-generating apparatus, a multi-band transmission & reception-signal-generating method and a multi-band-radio-signal-transmitting & receiving apparatus, which allow the sizes of hardware circuits to be reduced and are capable of implementing power conservation while serving as a multi-band system, and/or which can be used for generating a local oscillation signal for transmission and reception of signals in a plurality of bands in different transmission systems.

According to a first aspect of the present invention, there is provided a multi-band transmission & reception-signal-generating apparatus for generating signals for transmission and reception of a multi-band used in a first communication system for handling transmission signals each modulated by using information on phases only, and a second communication system for handling transmission signals each modulated by using information also on amplitude components, the multi-band transmission & reception-signal-generating apparatus comprising: constant-frequency-signal-generating means for generating a signal with a constant frequency; transmission & reception-reference-oscillation-signal-generating means for generating a reception-reference-oscillation signal for generating a reception local oscillation signal for demodulation of a signal received by the first communication system in the first communication system and demodulation of a signal received by the second communication system in the second communication system, and a transmission-reference-oscillation signal for generating a transmission oscillation signal for transmission of a signal by the first communication system in the first communication system and transmission of a signal by the second communication system in the second communication system; and transmission-oscillation-signal-generating means for generating a transmission oscillation signal of the first communication system and a transmission oscillation signal of the second communication system by comparison of an input reference frequency with the frequency of a reference oscillation signal generated by the transmission & reception-reference-oscillation-signal-generating means, the input reference frequency being a properly set value of the frequency of a signal generated by the constant-frequency-signal-generating means, wherein in the case of the second communication system, the transmission & reception-reference-oscillation-signal-generating means generates a reception local oscillation signal for demodulating a signal to be transmitted by the second communication system; and the transmission-oscillation-signal-generating means generates a transmission oscillation signal of the second communication system based on the reception reference oscillation signal generated by the transmission & reception-reference-oscillation-signal-generating means.

According to a second aspect of the present invention, there is provided a multi-band transmission & reception-signal-generating method for generating signals for transmission and reception of a multi-band used in a first communication system for handling transmission signals each modulated by using information on phases only; and a second communication system for handling transmission signals each modulated by using information also on amplitude components, the multi-band transmission & reception-signal-generating method comprising: a transmission & reception-reference-oscillation-signal-generating step of generating a reception-reference-oscillation signal for generating a reception oscillation signal for demodulation of a signal received by the first communication system in the first communication system and demodulation of a signal received by the second communication system in the second communication system, and a transmission-reference-oscillation signal for generating a transmission oscillation signal for transmission of a signal by the first communication system in the first communication system and transmission of a signal by the second communication system in the second communication system; and a transmission-oscillation-signal-generating step of generating a transmission oscillation signal of the first communication system and a transmission oscillation signal of the second communication system by comparison of an input reference frequency with the frequency of a reference oscillation signal generated by the transmission & reception-reference-oscillation-signal-generating means, the input reference frequency being a properly set value of the frequency of a signal having a constant frequency.

According to a third aspect of the present invention, there is provided a multi-band-radio-signal-transmitting & receiving apparatus for generating signals for transmission and reception of a multi-band used in a first communication system for handling transmission signals each modulated by using information on phases only, and a second communication system for handling transmission signals each modulated by using information on amplitude components, the multi-band transmission & reception-signal-generating apparatus comprising: constant-frequency-signal-generating means for generating a signal with a constant frequency; transmission & reception-reference-oscillation-signal-generating means for generating a reception-reference-oscillation signal for generating a reception local oscillation signal for demodulation of a signal received by the first communication system in the first communication system and demodulation of a signal received by the second communication system in the second communication system, and a transmission-reference-oscillation signal for generating a transmission oscillation signal for transmission of a signal by the first communication system in the first communication system and transmission of a signal by the second communication system in the second communication system; and transmission-oscillation-signal-generating means for generating a transmission oscillation signal of the first communication system and a transmission oscillation signal of the second communication system by comparison of an input reference frequency with the frequency of a reference oscillation signal generated by the transmission & reception-reference-oscillation-signal-generating means, the input reference frequency being a properly set value of the frequency of a signal generated by the constant-frequency-signal-generating means, wherein in the case of the second communication system, the transmission & reception-reference-oscillation-signal-generating means generates a reception local oscillation signal for demodulating a signal to be transmitted by the second communication system; and the transmission-oscillation-signal-generating means generates a transmission oscillation signal of the second communication system based on the reception reference oscillation signal generated by the transmission & reception-reference-oscillation-signal-generating means.

The above-mentioned program may be distributed by a portable storage medium such as a CD-ROM, a DVD-ROM, a memory card, etc. or through a network.

The invention will now be described by way of example with reference to the accompanying drawings, throughout which like parts are referred to by like references, and in which:
FIG. 2 is a block diagram showing the circuits of PLL systems serving as main components of the GSM terminal;
FIG. 3 is a block diagram showing the circuit of a PLL system employed in a WCDMA terminal;
FIG. 4 is a block diagram showing the configuration of a multi-band-radio-signal-transmitting & receiving apparatus implemented by a first embodiment of the present invention;
FIG. 5 is a block diagram showing configurations of a transmission-signal-processing unit and a received-signal-processing unit, which are employed in the multi-band-radio-signal-transmitting & receiving apparatus;
FIG. 6 is a block diagram showing a PLL-system circuit comprising multi-band-reception-signal-generating units serving as main components of the first embodiment;
Fig. 7 (drawn as Figs 7A and 7B) is circuit diagrams showing the configurations of a Gilbert mixer and a cascade amplifier;
FIG. 8 is a diagram showing a PLL-system circuit shown in FIG. 5, reception system (RX) circuits composing a DCR configuration and elements including an additional WCDMA orthogonal-modulation unit;
FIG. 9 is a block diagram showing the configuration of a multi-band-radio-signal-transmitting & receiving apparatus implemented by a second embodiment of the present invention;
FIG. 10 is a block diagram showing a PLL-system circuit comprising multi-band-transmission & reception - signal-generating units serving as main components of the second embodiment;
FIG. 11 is a block diagram showing the configuration of a multi-band-radio-signal-transmitting & receiving apparatus implemented by a third embodiment of the present invention;
FIG. 12 is a block diagram showing a PLL-system circuit comprising multi-band-reception-signal-generating units serving as main components of the third embodiment;
FIG. 13 is a block diagram showing the configuration of a multi-band-radio-signal-transmitting & receiving apparatus implemented by a fourth embodiment of the present invention; and
FIG. 14 is a block diagram a PLL-system circuit comprising showing multi-band-reception-signal-generating units serving as main components of the fourth embodiment.

Hereinafter, some preferred embodiments of the present invention will be described with reference to the drawings. To begin with, a first embodiment implements a multi-band-radio-signal-transmitting & receiving apparatus combining a TDMA system used in a GSM terminal and/or a DCS terminal with a CDMA system used in a WCDMA terminal to serve as a multi-band system's terminal for rendering services of both the GSM terminal and/or a DCS terminal and the WCDMA terminal.

Details of the multi-band-radio-signal-transmitting & receiving apparatus will be described later. In brief, the multi-band-radio-signal-transmitting & receiving apparatus can be used in a GSM mode, a DCS mode and a WCDMA mode. For this reason, the multi-band-radio-signal-transmitting & receiving apparatus is provided with a configuration like one shown in FIG. 1.

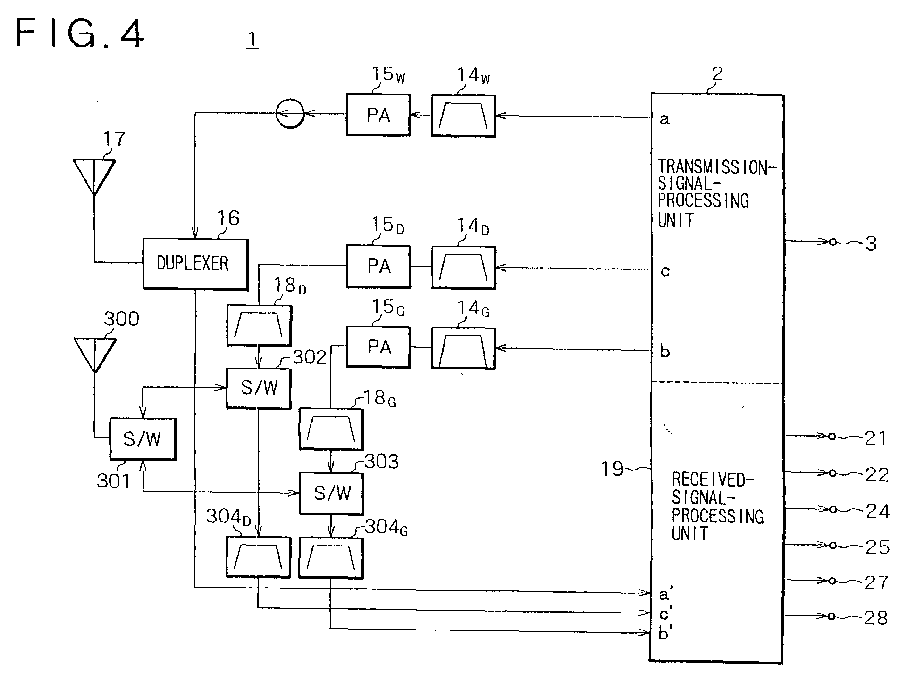

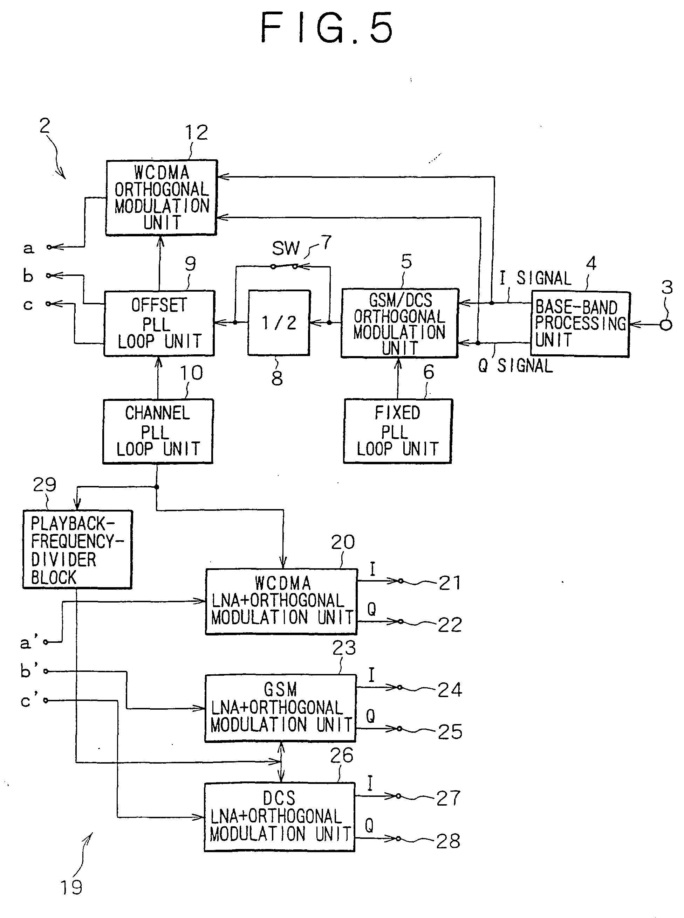

The multi-band-radio-signal-transmitting & receiving apparatus 1 shown in FIG. 4 includes a transmission-signal-processing unit 2 and a received-signal-processing unit 19. FIG. 5 is a diagram showing detailed configurations of the transmission-signal-processing unit 2 and the received-signal-processing unit 19. The multi-band-radio-signal-transmitting & receiving apparatus 1 includes a concrete implementation of a transmission & reception-signal-generating apparatus according to the present invention inside the transmission-signal-processing unit 2 and the received-signal-processing unit 19. The concrete implementation of the transmission & reception-signal-generating apparatus generates signals for transmission and reception of a multi-band. The concrete implementation of the transmission & reception-signal-generating apparatus comprises a fixed PLL loop unit 6 serving as a means for generating a signal with a constant frequency, a channel PLL loop unit 10 serving as a means for generating a reference oscillation signal for transmission and reception, an offset PLL loop unit 9 serving as a means for generating an oscillation signal for transmission and a GSM/DCS orthogonal-modulation unit 5 serving as a first modulation means. The transmission & reception-signal-generating apparatus will be more fully described later.

First of all, a transmission system of the multi-band-radio-signal-transmitting & receiving apparatus 1 is described by referring to FIGS. 4 and 5. Transmission data generated by a data-generating unit not shown in the figure and received through an input terminal 3 is supplied to a base-band processing unit 4 employed in the transmission-signal-processing unit 2. The base-band processing unit 4 carries out phase modulation on the transmission data to generate I and Q signals orthogonal to each other.

The I and Q signals are supplied to an orthogonal-modulation unit 5 for GSM and/or DCS use for mixing the I and Q signals with a signal having an intermediate frequency (IF) received from the fixed PLL loop unit 6 before synthesizing them to produce an orthogonal-modulation signal. The orthogonal-modulation unit 5 for GSM and/or DCS use is referred to hereafter simply as a GSM/DCS orthogonal-modulation unit. It should be noted that the GSM/DCS orthogonal-modulation unit 5 functions merely as an amplifier when the multi-band-radio-signal-transmitting & receiving apparatus 1 is used in the WCDMA mode. Details of this will be described later.

When used in the GSM/DCS mode, the GSM/DCS orthogonal-modulation signal generated by the GSM/DCS orthogonal-modulation unit 5 is supplied to the offset PLL loop unit 9 through a switch (SW) 7 which has been turned on. The offset PLL loop unit 9 carries out orthogonal modulation for generating a transmission oscillation frequency fTX_G of the 900-MHz band for GSM use and a transmission oscillation frequency fTX_D of the 1,800-MHz band for DCS use.

At that time, the offset PLL loop unit 9 also receives a transmission reference oscillation frequency fL0_TX_G for GSM use and a transmission reference oscillation frequency fL0_TX_D for DCS use from the channel PLL loop unit 10 which functions as an offset PLL frequency synthesizer.

The GSM transmission oscillation frequency fTX_G and the DCS transmission oscillation frequency fTX_D, which are generated by the offset PLL loop unit 9 from the transmission reference oscillation frequency fL0_TX_G for GSM use and the transmission reference oscillation frequency fL0_TX_D for DCS use respectively, are supplied to output terminals b and c of the transmission-signal-processing unit 2.

In the WCDMA mode, on the other hand, the frequency of a signal amplified at the GSM/DCS orthogonal-modulation unit 5 is divided by 2 by the frequency divider 8 before being supplied to the offset PLL loop unit 9. The offset PLL loop unit 9 receives an oscillation signal from the channel PLL loop unit 10 to generate a signal for WCDMA use. The oscillation signal is generated by the channel PLL loop unit 10 by oscillation in the same band as a WCDMA reception frequency in order to obtain a local oscillation frequency for DCR (direct conversion receiver) use. The offset PLL loop unit 9 supplies the signal for WCDMA use to the WCDMA orthogonal-modulation unit 12 which supplies a transmission oscillation frequency fTX_W for WCDMA use to an output terminal a of the transmission-signal-processing unit 2.

The frequency for WCDMA transmission has a value in the range 1,920 MHz to 1,980 MHz. On the other hand, a frequency for DCS transmission is 1,800 MHz and the frequency for GSM transmission has a value in the range of 880 MHz to 915 MHz.

A WCDMA-transmission signal appearing at the output terminal a of the transmission-signal-processing unit 2 is subjected to band limitation carried out by a BPF 14_{w}. A signal output by the BPF 14_{w} is amplified by a power amplifier (PA) 15_{w} and subjected to signal adjustment in an isolator before being supplied to an antenna 17 by way of a duplexer 16 to be radiated to the air.

In the same way, a GSM-transmission signal appearing at the output terminal b of the transmission-signal-processing unit 2 is subjected to band limitation carried out by a BPF 14_{G}. A signal output by the BPF 14_{G} is amplified by a power amplifier (PA) 15_{G} and further subjected to band limitation by a BPF 18G. A signal output by the BPF 18_{G} is supplied to an antenna 300 by way of high-frequency switches (S/W) 303 and 301 to be radiated to the air.

By the same token, a DCS-transmission signal appearing at the output terminal c of the transmission-signal-processing unit 2 is subjected to band limitation carried out by a BPF 14_{D}. A signal output by the BPF 14_{D} is amplified by a power amplifier (PA) 15_{D} and further subjected to band limitation by a BPF 18_{D}. A signal output by the BPF 18_{D} is supplied to the antenna 300 by way of a high-frequency switch (S/W) 301 and the high-frequency switch 301 to be radiated to the air.

Next, a reception system is described. An RF signal for WCDMA reception is received through the antenna 17 and separated by the duplexer 16 before being supplied to an input terminal a' of the received-signalprocessing unit 19. On the other hand, an RF signal for GSM reception is received through the antenna 300 and supplied to a BPF 304_{G} by way of the high-frequency switches 301 and 303. The BPF 304_{G} imposes band limitation on the RF signal for GSM reception and then supplies the signal to an input terminal b' of the received-signal-processing unit 19. By the same token, an RF signal for DCS reception is received through the antenna 300 and supplied to a BPF 304_{D} by way of the high-frequency switches 301 and 302. The BPF 304_{D} imposes band limitation on the RF signal for DCS reception and then supplies the signal to an input terminal c' of the received-signal-processing unit 19.

The RF signal for WCDMA reception is supplied to a WCDMA LNA (low-noise amplifier) + orthogonal-modulation unit 20 by way of the input terminal a' of the received-signal-processing unit 19. In the WCDMA LNA + orthogonal-modulation unit 20, the RF signal for WCDMA reception is amplified by an LNA and demodulated by using a signal generated by the channel PLL loop unit 10 at a reception reference oscillation frequency fL0_RX_W. Results of demodulation of the RF signal for WCDMA reception are an in-phase signal (I signal) and an orthogonal signal (Q signal) which are supplied to output terminals 21 and 22 respectively.

In the same way, the RF signal for GSM reception is supplied to a GSM LNA (low-noise amplifier) + orthogonal-modulation unit 23 by way of the input terminal b' of the received-signal-processing unit 19. In the GSM LNA + orthogonal-modulation unit 23, the RF signal for GSM reception is amplified by an LNA and demodulated by using a signal generated by the channel PLL loop unit 10 and a frequency-divider block 29 at a frequency equal to (2/3) times a reception reference oscillation frequency fL0_RX_G. Results of demodulation of the RF signal for GSM reception are an in-phase signal (I signal) and an orthogonal signal (Q signal) which are supplied to output terminals 24 and 25 respectively.

By the same token, the RF signal for DCS reception is supplied to a DCS LNA (low-noise amplifier) + orthogonal-modulation unit 26 by way of the input terminal c' of the received-signal-processing unit 19. In the DCS LNA + orthogonal-modulation unit 26, the RF signal for DCS reception is amplified by an LNA and demodulated by using a signal generated by the channel PLL loop unit 10 and the frequency-divider block 29 at a frequency equal to (4/ 3) times a reception reference oscillation frequency ffL0_RX_D. Results of demodulation of the RF signal for DCS reception are an in-phase signal (I signal) and an orthogonal signal (Q signal) which are supplied to output terminals 27 and 28 respectively.

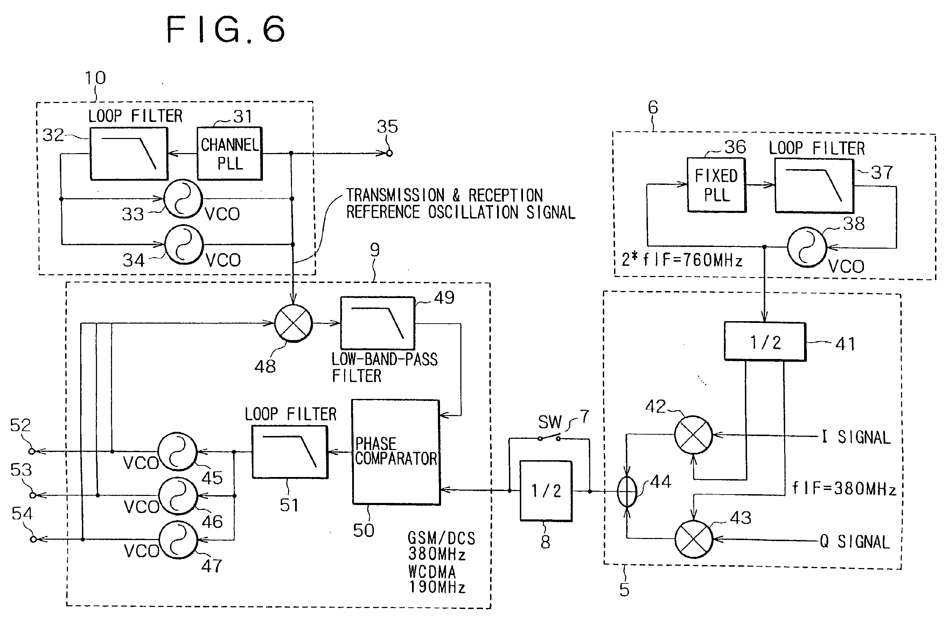

Next, the aforementioned multi-band-reception-signal-generating units embedded in the multi-band-radio-signal-transmitting & receiving apparatus 1 are described by referring to FIG. 6. The units for generating multi-band reception signals are referred to as a PLL-system circuit in FIG. 6.

As shown in the figure, the PLL-system circuit includes the offset PLL loop unit 9, the channel PLL loop unit 10, the fixed PLL loop unit 6 and the GSM/DCS orthogonal-modulation unit 5. The offset PLL loop unit 9 is used for generating a transmission frequency completing orthogonal modulation in a GSM or DCS mode. The channel PLL loop unit 10 functions as a frequency synthesizer for the offset PLL loop unit 9. The fixed PLL loop unit 6 is used for generating an IF frequency by using a fixed PLL. The GSM/DCS orthogonal-modulation unit 5 divides the IF frequency generated by the fixed PLL loop unit 6 and carries out orthogonal modulation on a signal with a frequency resulting from the frequency division. The orthogonal modulation is carried out by using I and Q signals received from the base-band processing unit 4 shown in FIG. 5 to produce an orthogonal-modulation signal to be supplied to the offset PLL loop unit 9. As shown in the figure, the PLL-system circuit also has a frequency divider 8 for dividing the frequency of the orthogonal-modulation signal generated by the GSM/DCS orthogonal-modulation unit 5 and a switch (SW) 7 for bypassing the same.

The channel PLL loop unit 10 comprises a channel PLL 31, a loop filter 32, a GSM/DCS VCO 33 and a WCDMA VCO 34. The channel PLL loop unit 10 generates an appropriate frequency to be described later. The frequency generated by the channel PLL loop unit 10 is an oscillation frequency adjusted to the frequency of a channel which is used when the multi-band-radio-signal-transmitting & receiving apparatus 1 operates in the GSM/DCS or WCDMA mode.

The fixed PLL loop unit 6 includes a fixed PLL 36, a loop filter 37 and a VCO 38. The fixed PLL loop unit 6 generates a signal with an IF of 760 MHz (= 2 * fIF) and supplies the signal to the GSM/DCS orthogonal-modulation unit 5.

The GSM/DCS orthogonal-modulation unit 5 comprises a frequency divider 41, a first mixer 42, a second mixer 43 and an adder 44. The frequency divider 41 converts the 760-MHz IF signal generated by the fixed PLL loop unit 6 into mutually orthogonal signals each having an IF of 380-MHZ. The mutually orthogonal signals are supplied to the first mixer 42 and the second mixer 43 respectively. The GSM/DCS orthogonal-modulation unit 5 carries out orthogonal modulation by mixing the mutually orthogonal signals each having an IF of 380-MHZ with the IQ base-band signals supplied by the base-band processing unit 4 in the first mixer 42 and the second mixer 43 respectively. In the GSM/DCS mode, the GSM/DCS orthogonal-modulation unit 5 supplies an orthogonal-modulation output to the offset PLL loop unit 9 by way of the switch 7.

The offset PLL loop unit 9 comprises a first VCO 45, a second VCO 46, a third VCO 47, a mixer 48, an LPF (Low-Pass Filter) 49, a phase comparator 50 and a loop filter 51. In the GSM/DCS mode, while the phase comparator 50 is comparing the phase of a signal output by the LPF 49 with the phase of the 380-MHz orthogonal-modulation signal received from the GSM/DCS orthogonal-modulation unit 5 through the switch 7, the first VCO 45 and the second VCO 46 supply a transmission oscillation frequency fTX_G for GSM use and a transmission oscillation frequency fTX D for DCS use to output terminals 52 and 53 respectively. In the WCDMA mode, on the other hand, while the phase comparator 50 is comparing the phase of the signal output by the LPF 49 with the phase of a through signal of a 190-MHz IF signal received from the GSM/DCS orthogonal-modulation unit 5 through the frequency divider 8, the third VCO 47 supplies a transmission oscillation frequency for WCDMA use to the WCDMA orthogonal-modulation unit 12 shown in FIG. 5 by way of an output terminal 54.

The following description explains operations carried out by the PLL-system circuit employed in the multi-band-radio-signal-transmitting & receiving apparatus 1 in the GSM mode, the DCS mode and the WCDMA mode by referring to Table 1.

**[Table 1]**

| Communication mode | Transmission frequency band (TX) [MHz] | Reception frequency band (RX) [MHz] | VCOs for RX/TX | Oscillation frequencies of RX-VCO / TX-VCO [MHz] | Division rate of reception local oscillation | IF-VCO (VCO 38) oscillation frequency [MHz] |
|---|---|---|---|---|---|---|
| GSM | 880-915 | 925-960 | VCO33 /VCO45 | 1387.5-1440 /1260-1295 | 2/3 | 760 |
| DCS | 1710-1785 | 1805-1880 | VCO33 /VCO46 | 1353.75-1410 /1330-1405 | 4/3 | 760 |
| WCDMA | 1920-1980 | 2110-2170 | VCO34 /VCO47 | 2110-2170 /1920-1980 | 1 | 760 |

First of all, the operation carried out in the GSM mode is described. In the GSM mode, the channel PLL loop unit 10 employed in this embodiment generates a transmission reference oscillation frequency fL0_TX_G (TX-VCO) in the range of 1,260 MHz to 1,295 MHz during transmission and a reception reference oscillation frequency fL0_ RX_G (RX-VCO) in the range of 1,387.5 MHz to 1,440 MHz during reception.

On the other hand, the fixed PLL loop unit 6 including the VCO 38 generates a signal with an IF of 760 MHz (= 2 * fIF) and supplies the signal to the GSM/DCS orthogonal-modulation unit 5.

In the GSM/DCS orthogonal-modulation unit 5, the frequency divider 41 converts the 760-MHz IF signal generated by the fixed PLL loop unit 6 into mutually orthogonal signals each having an IF of 380-MHZ. The mutually orthogonal signals are supplied to the first mixer 42 and the second mixer 43 respectively. The GSM/DCS orthogonal-modulation unit 5 carries out orthogonal modulation by mixing the mutually orthogonal signals each having an IF of 380-MHZ with the IQ base-band signals supplied by the base-band processing unit 4 in the first mixer 42 and the second mixer 43 respectively. Signals output by the first mixer 42 and the second mixer 43 are synthesized by the adder 44. The GSM/DCS orthogonal-modulation unit 5 supplies an orthogonal-modulation output to the offset PLL loop unit 9 by way of the switch 7.

In the offset PLL loop unit 9, the oscillation frequency of the first VCO 45 for GSM use is converged to a value equal to the oscillation frequency of the VCO 33 minus half the oscillation frequency of the VCO 38. Thus, the oscillation frequency TX of the first VCO 45 for GSM use oscillates in the range of (1,260 - 380) MHz to (1,295 - 380) MHz = 880 MHz to 915 MHz. Frequencies in this range are equal to GSM transmission frequencies. Since the 380-MHz orthogonal-modulation signal supplied to the phase comparator 50 conveys information on IQ phases, the first VCO 45 is also subjected to phase modulation based on the information on IQ phases to allow a GSM transmission signal to be directly obtained from GMSK modulation. During reception, the channel PLL loop unit 10 is controlled so that the oscillation frequency (fL0_RX_G) of the VCO 33 for GSM/DCS use is adjusted to a value in the range of 1,387.5 MHz to 1,440 MHz. By multiplying this range by 2/3, it is possible to obtain a range 925 MHz to 960 MHz, that is, a reception local oscillation frequency = (2/3) X the oscillation frequency fL0_RX_G. Since this signal has a frequency equal to a reception frequency, the frequency can be used as a local oscillation frequency of a DCR (direct conversion receiver). It should be noted that the channel PLL loop unit 10 can also be controlled so as to generate the range 925 MHz to 960 MHz from the beginning. In this case, however, if the frequency generated by the VCO 33 is equal to the reception frequency, a DC offset voltage level inevitably increases at a direct-conversion time due to coupling between the VCO 33 as well as the reception circuit and, for example, an LNA. Thus, the scheme adopted above is deliberately taken for avoiding this problem.

Next, the operation carried out at the DCS mode is described. In the DCS mode, the channel PLL loop unit 10 employed in this embodiment generates a transmission reference oscillation frequency f_L0_TX_D (TX-VCO) in the range of 1,330 MHz to 1,405 MHz during transmission and a reception reference oscillation frequency f0_RX_D (RX-VCO) in the range of 1,353.75 MHz to 1,410 MHz during reception.

In the GSM/DCS orthogonal-modulation unit 5, the frequency divider 41 converts the 760-MHz IF signal generated by the fixed PLL loop unit 6 into two mutually orthogonal signals each having an IF of 380-MHZ. The two mutually orthogonal signals are supplied to the first mixer 42 and the second mixer 43 respectively. The first mixer 42 and the second mixer 43 also receive IQ base-band signals from the base-band processing unit 4. The first mixer 42 and the second mixer 43 carry out orthogonal modulation by mixing the mutually orthogonal signals each having an IF of 380-MHZ with the IQ base-band signals supplied by the base-band processing unit 4. Signals output by the first mixer 42 and the second mixer 43 are synthesized by the adder 44. The GSM/DCS orthogonal-modulation unit 5 supplies an orthogonal-modulation output to the offset PLL loop unit 9 by way of the switch 7.

In the offset PLL loop unit 9, the oscillation frequency of the second VCO 46 is converged to a value equal to the oscillation frequency of the VCO 33 plus half the oscillation frequency of the VCO 38. Thus, the oscillation frequency TX of the second VCO 46 for GSM use oscillates in the range of (1,330 - 380) MHz to (1,405 + 380) MH2 - 1,710 MHz to 1,785 MHz. Frequencies in this range are equal to DCS transmission frequencies.

It should be noted that the polarity of the phase comparator 50 at that time needs to be set at a state opposite to that in the GSM mode. In addition, the IQ base band signals are supplied to the GSM/DCS orthogonal-modulation unit 5 as described above and the IF of 760 MHz generated by the VCO 38 is divided by 2 prior to orthogonal modulation. Since the 380-MHz orthogonal-modulation signal supplied to the phase comparator 50 conveys information on IQ phases, the second VCO 46 is also subjected to phase modulation based on the information on IQ phases to allow a DCS transmission signal to be directly obtained from GMSK modulation.

During reception, the channel PLL loop unit 10 is controlled so that the reception reference oscillation frequency fL0_RX_D (RX-VCO) of the VCO 33 is adjusted to a value in the range of 1,353.75 MHz to 1,410 MHz. By multiplying this range by 4/3, it is possible to obtain a range of 1,805 MHz to 1,880 MHz, that is, a reception local oscillation frequency = (4/3) X the oscillation frequency fL0_RX_D. Since this signal has a frequency equal to a reception frequency, the frequency can be used as a local oscillation frequency of a direct conversion receiver. It should be noted that the channel PLL loop unit 10 can also be controlled so as to generate the range of 1,805 MHz to 1,880 MHz from the beginning. In this case, however, if the frequency generated by the VCO 33 is equal to the reception frequency, a DC offset voltage level inevitably increases at a direct-conversion time due to coupling between the VCO 33 as well as the reception circuit and, for example, an LNA. Thus, the scheme adopted above is deliberately taken for avoiding this problem. Since the frequency band of the VCO 33 in the GSM mode is close to the frequency band of the VCO 33 in the DCS mode, the VCO 33 can be shared by the two modes.

Next, the operation carried out in the WCDMA mode is described. As VCOs, the offset PLL loop unit 9 and the channel PLL loop unit 10 use the third VCO 47 and the VCO 34 respectively. On the other hand, the fixed PLL loop unit 6 uses the VCO 38 which is also used in the GSM and DCS modes. The oscillation frequency of the VCO 38 in the WCDMA mode is also set at 760 MHz.

In the embodiment shown in FIG. 6, the channel PLL loop unit 10 is controlled so that the VCO 34 for WCDMA use oscillates in the same band as the range of 2,110 MHz to 2,170 MHz, which is a range of WCDMA reception frequencies, so as to give a local oscillation frequency fL0_RX_W for DCR (direct conversion receiver) use. In the mean time, the frequency of 760 MHz generated by the fixed PLL loop unit 6 is divided by 2 by the frequency divider 41 employed in the GSM/DCS orthogonal-modulation unit 5 so as to give two mutually orthogonal signals which are then supplied to the first mixer 42 and the second mixer 43 respectively. At that time, however, WCDMA base-band signals are not supplied to the first mixer 42 and the second mixer 43 as IQ inputs as is the case with the GSM and DCS modes. Instead, DC voltages are supplied to the first mixer 42 and the second mixer 43. To be more specific, an appropriate DC electric potential is applied to one of differential I inputs. On the other hand, a 0-V DC electric potential is applied to the other differential I input and the Q input. In this way, the first mixer 42 does not work as a mixer. Instead, the first mixer 42 functions as a cascade amplifier while the second mixer 43 does not operate but is put in an OFF state. As another method, control can also be executed to turn off the power supplies of the frequency divider 41 and the second mixer 43 so as to halt the operation of the second mixer 43.

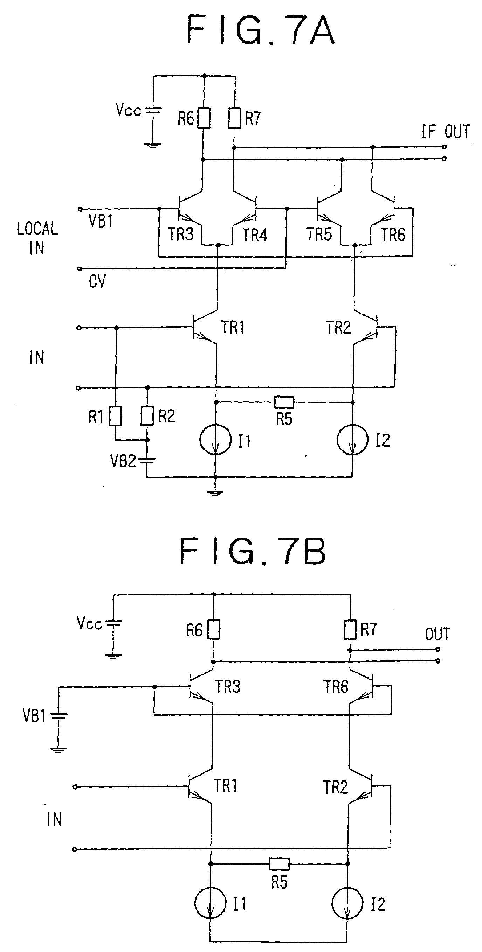

FIG. 7 is diagrams each showing a typical circuit serving as the first mixer 42. To be more specific, FIG. 7 (a) shows a complete circuit operating as a Gilbert mixer. Normally, IN and LOCAL IN terminals are used for receiving RF and local-oscillation signals respectively. A signal with a transformed frequency is output from an IF OUT terminal. By utilizing this operation, two Gilbert mixers are used to compose the GSM/DCS orthogonal-modulation unit 5 operating in the GSM and DCS modes as shown in FIG. 6. The IN terminal shown in FIG. 7 (a) is used as a signal input terminal for receiving the 380-MHz signal from the frequency divider 41 shown in FIG. 6. The LOCAL IN terminal shown in FIG. 7 (a) corresponds to the IQ input terminals shown in FIG. 6. Normally, the LOCAL IN terminal is used for receiving a superposed BB signal with the DC electric potential of a DC voltage VB1 taken as a center. In the WCDMA mode, on the other hand, only a proper DC voltage is applied to the I input terminal of the first mixer 42 shown in FIG. 73, that is, the LOCAL IN terminal shown in FIG. 7 (a) as described above. To put it concretely, a DC voltage VB1 is applied to the LOCAL IN terminal connected to the bases of transistors TR3 and TR6. On the other hand, a voltage of 0 V is applied to the LOCAL IN terminal connected to the bases of transistors TR4 and TR5. Since no currents flow to the bases of the transistors TR4 and TR5, these transistors are turned off. This operation can be implemented by operating the IQ outputs of BB. As a result, the circuit shown in FIG. 7 (a) becomes all but equivalent to the circuit shown in FIG. 7 (b). This is because the circuit becomes a cascaded amplifier including transistors TR1 and TR2 serving as a differential-input grounded-base amplifier as well as transistors TR3 and TR6 serving as a grounded-base amplifier wired to the differential-input grounded-base amplifier in cascade connection. The operation of the circuit changes from that of a mixer to that of an amplifier.

As described above, in the WCDMA mode, the first mixer 42 outputs the frequency of 380-MHz obtained as a result of division of a frequency generated by the fixed PLL loop unit 6 by 2 without frequency transformation. The frequency of 380-MHz is further divided by 2 by the frequency divider 8 to give a reference frequency of 190 MHz which is then supplied to the phase comparator 50 employed in the offset PLL loop unit 9.

In the offset PLL loop unit 9, on the other hand, the oscillation signal generated by the third VCO 47 for WCDMA use is mixed by the mixer 48 with the oscillation signal generated by the VCO 34 to give a frequency equal to a difference obtained as a result of subtraction of the oscillation frequency of the third VCO 47 from the oscillation frequency of the VCO 34. The difference-frequency signal output by the mixer 48 is filtered by the LPF 49 before being supplied to the phase comparator 50 to be compared with the signal with the frequency of 190 MHz. Thus, the loop converges the oscillation frequency of the third VCO 47 to a value equal to a difference obtained as a result of subtraction of 190 MHz from the oscillation frequency of the VCO 34. That is to say, the oscillation frequency of the VCO 34 varies in the range of (2,110 - 190) MHz to (2,170 - 190) MHz = 1,920 MHz to 1,980 MHz. This range is equal to the WCDMA transmission frequency band. Thus, by connecting the WCDMA orthogonal-modulation unit 12 to the output of the third VCO 47 shown in FIG. 6 as illustrated in FIG. 5 in order to carry out modulation by the WCDMA IQ signals, a WCDMA transmission signal can be obtained.

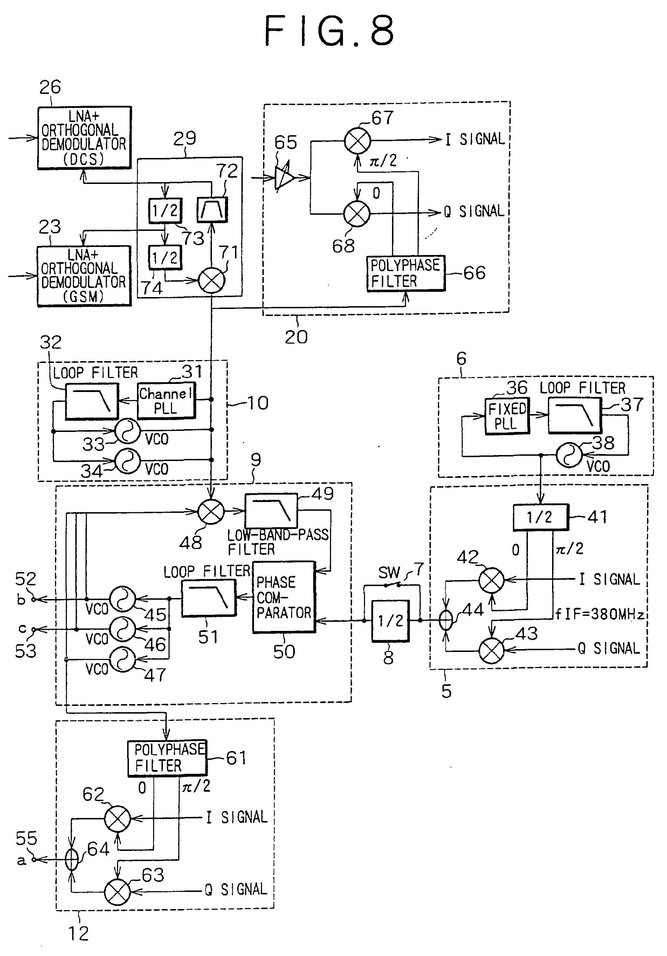

FIG. 8 is a diagram showing the PLL-system circuit shown in FIG. 6, reception system (RX) circuits composing a DCR configuration and elements including an additional WCDMA orthogonal-modulation unit.

The WCDMA transmission signal generated by the third VCO 47 employed in the offset PLL loop unit 9 is supplied to the WCDMA orthogonal-modulation unit 12. In the WCDMA orthogonal-modulation unit 12, this signal is supplied to a poly-phase filter 61 to be split into two mutually orthogonal signals, that is, two signals having a phase difference of π/2. The two mutually orthogonal signals are supplied to first and second mixers 62 and 63 respectively. The first mixer 62 and the second mixer 63 also receive I and Q signals of the base band. As a result, an adder 64 generates a synthesis signal as a WCDMA transmission signal appearing at an output terminal 55 of the WCDMA orthogonal-modulation unit 12.

In the GSM or DCS mode, on the other hand, a transmission signal completing phase modulation in the GSM/DCS orthogonal-modulation unit 5 is obtained directly at an output terminal 52 or 53 of the first VCO 45 or the second VCO 46 respectively.

A signal output by the VCO 34 employed in the channel PLL loop unit 10 is passed directly to a WCDMA LNA + orthogonal demodulation unit 20. In the WCDMA LNA + orthogonal-modulation unit 20, the signal is supplied to a poly-phase filter 66 to be split into two mutually orthogonal signals, that is, two signals having a phase difference of π/2 as described above. The two mutually orthogonal signals are supplied to first and second mixers 67 and 68 respectively. The first mixer 67 and the second mixer 68 also receive an RF signal completing low-noise amplification in an LNA 65. As a result, the WCDMA LNA + orthogonal-modulation unit 20 generates IQ signals as its outputs.

In the GSM and DCS modes, on the other hand, a signal output by the VCO 33 employed in the channel PLL loop unit 10 is supplied to a playback frequency-divider block 29. The playback frequency-divider block 29 includes a mixer 71, a BPF 72, a first frequency divider 73 and a second frequency divider 74. The playback frequency-divider block 29 generates the GSM DCR local oscillation frequency equal to 2/3 times the frequency of the input signal and the GCS DCR local oscillation frequency equal to 4/3 times the frequency of the input signal.

In FIG. 8, a GSM LNA + orthogonal demodulation unit 23 and a DCS LNA + orthogonal demodulation unit 26 each have a configuration identical with that of the WCDMA LNA + orthogonal demodulation unit 20 and generate IQ signals at its output.

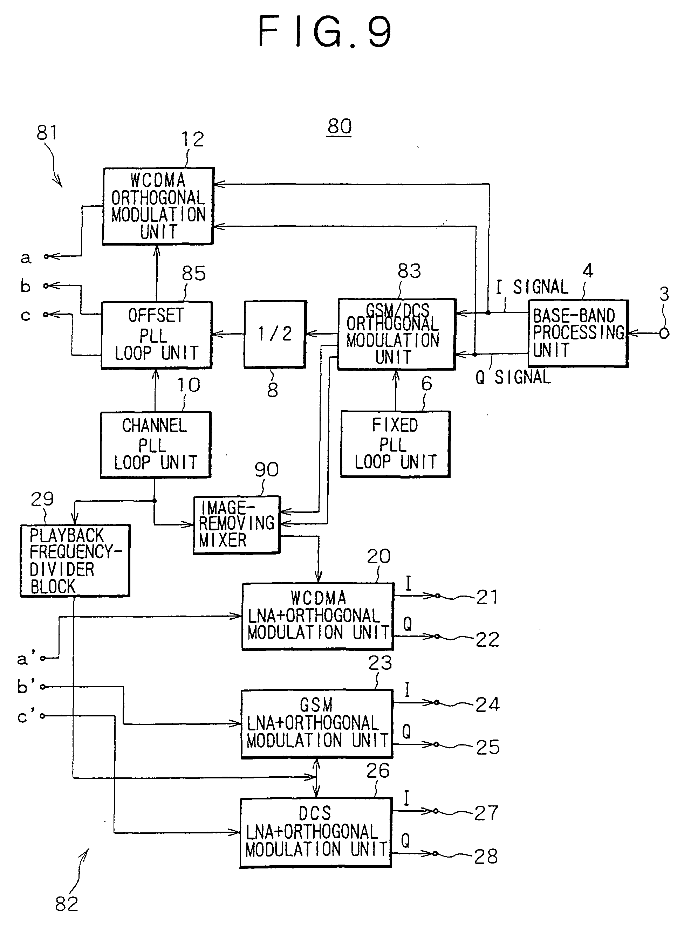

Next, a second embodiment of the present invention is described. The second embodiment is also a result of melting a TDMA system used in GSM as well as DCS terminals and a CDMA system used in a WCDMA terminal. The second embodiment can thus be used as a multi-band system terminal supporting services rendered by the two systems. FIG. 9 is a block diagram showing a configuration of main components constituting a multi-band-radio-signal-transmitting & receiving apparatus 80. The multi-band-radio-signal-transmitting & receiving apparatus 80 is different from the first embodiment in that the multi-band-radio-signal-transmitting & receiving apparatus 80 includes an image-removing mixer unit 90 for reducing a DC offset generated in the WCDMA mode.

The multi-band-radio-signal-transmitting & receiving apparatus 80 is also used in the three modes, namely, the GSM/DCS and WCDMA modes. For this reason, the multi-band-radio-signal-transmitting & receiving apparatus 80 is provided with a transmission-signal-processing unit 81 and a received-signal-processing unit 82 as shown in FIG. 9. The following describes the configurations of the transmission-signal-processing unit 81 and the received-signal-processing unit 82 which are employed in the multi-band-radio-signal-transmitting & receiving apparatus 80.

First of all, the transmission-signal-processing unit 81 is described. To be more specific, only peripherals of a configuration different from the transmission-signal-processing unit 2 employed in the multi-band-radio-signal-transmitting & receiving apparatus 1 shown in FIG. 4 are described. Transmission data received through an input terminal 3 is supplied to a base-band processing unit 4 employed in the transmission-signal-processing unit 81. The base-band processing unit 4 converts the transmission data into I and Q signals orthogonal to each other. The I and Q signals are supplied to a GSM/DCS orthogonal-modulation unit 83. In the GSM and DCS modes, the GSM/DCS orthogonal-modulation unit 83 operates in a way different from that in the WCDMA mode. To be more specific, in the GSM and DCS modes, the intermediate frequency (IF) of 760 MHz generated by the fixed PLL loop unit 6 is divided by 2 so as to give two mutually orthogonal 380-MHz signals which are then mixed with the I and Q signals respectively to produce an orthogonal-modulation signal. In the WCDMA mode, on the other hand, the intermediate frequency (IF) of 760 MHz generated by the fixed PLL loop unit 6 is divided by 4 so as to give mutually orthogonal 190-MHz signals which are then mixed with the signal having a divided frequency of 380-MHz in the first mixer 42 and the second mixer 43 respectively. A signal output by the first mixer 42 is then added to a signal output by the second mixer 43 in the adder 44 to result in a signal with an IF of 570 MHz. The signal with an IF of 570 MHz is finally supplied to a frequency divider 8.

The frequency of the GSM/DCS 380-MHz orthogonal-modulation signal produced by the GSM/DCS orthogonal-modulation unit 83 in the GSM or DCS mode is divided by the frequency divider 8 into a frequency of 190 MHz. A 190-MHz signal output by the frequency divider 8 is supplied to an offset PLL loop unit 85. By using the GSM/DCS 190-MHz orthogonal-modulation signal received from the frequency divider 8, the offset PLL loop unit 85 generates a transmission oscillation signal fTX_G for GSM use in a band of 900 MHz and a transmission oscillation signal fTX_D for DCS use in a band of 1,800 MHz. The transmission oscillation signal fTX_G for GSM use in a band of 900 MHz and the transmission oscillation signal fTX_D for DCS use in a band of 1,800 MHz are supplied to output terminals b and c respectively. At that time, the offset PLL loop unit 85 receives a transmission local oscillation signal fL0_TX_G for GSM use and a transmission oscillation signal fL0_TX_D for DCS use from the channel PLL loop unit 10.

In the WCDMA mode, on the other hand, the offset PLL loop unit 85 uses a WCDMA 285-MHz signal received from the GSM/DCS orthogonal-modulation unit 83 through the frequency divider 8 to generate a transmission signal having a transmission oscillation frequency fTX_W in a band of 1,900 MHz. The transmission signal with the 1900-MHz band transmission oscillation frequency fTX_W is supplied to the WCDMA orthogonal-modulation unit 12 for generating a WCDMA transmission oscillation frequency fTX_W to be supplied to an output terminal a.

The transmission oscillation signals appearing at the output terminals a, b and c are supplied to a VCO, a BPF, a PA, a duplexer and switches to be eventually radiated to the air by an antenna as an RF signal in the same way as the embodiment shown in FIG. 1.

Next, an overview of the received-signal-processing unit 82 is described. The received-signal-processing unit 82 is different from the received-signal-processing unit 19 shown in FIG. 5 in that, in the case of the received-signal-processing unit 82, an image-eliminating mixer unit 90 is added between the channel PLL loop unit 10 and the WCDMA LNA + orthogonal-modulation unit 20. The image-eliminating mixer unit 90 is used for reducing a DC offset generated in the WCDMA mode. Since the rest of the configuration of the received-signal-processing unit 82 is identical with the received-signal-processing unit 19, it is not necessary to repeat its description.

The overall operation of the received-signal-processing unit 82 is described briefly as follows. RF signals of a variety of systems are received through an antenna, switches, a BPF and a duplexer which are connected to each other in the same way as the embodiment shown in FIG. 1. The RF signals are supplied to input terminals a', b' and c' of the received-signal-processing unit 82.

Then, when the multi-band-radio-signal-transmitting & receiving apparatus 80 is used in the WCDMA mode, in the WCDMA LNA + orthogonal-modulation unit 20, a WCDMA received signal amplified by an LNA is demodulated by using a reception local oscillation signal fL0_RX_W with its DC component reduced by the image-eliminating mixer unit 90 to generate an in-phase signal (I signal) and an orthogonal signal (Q signal) which are supplied to output terminals 21 and 22 respectively. Since operations carried out by the received-signal-processing unit 82 employed in the multi-band-radio-signal-transmitting & receiving apparatus 80 in the GSM and DCS modes are the same as those of the received-signal-processing unit 19 shown in FIG. 5, it is not necessary to repeat its description.

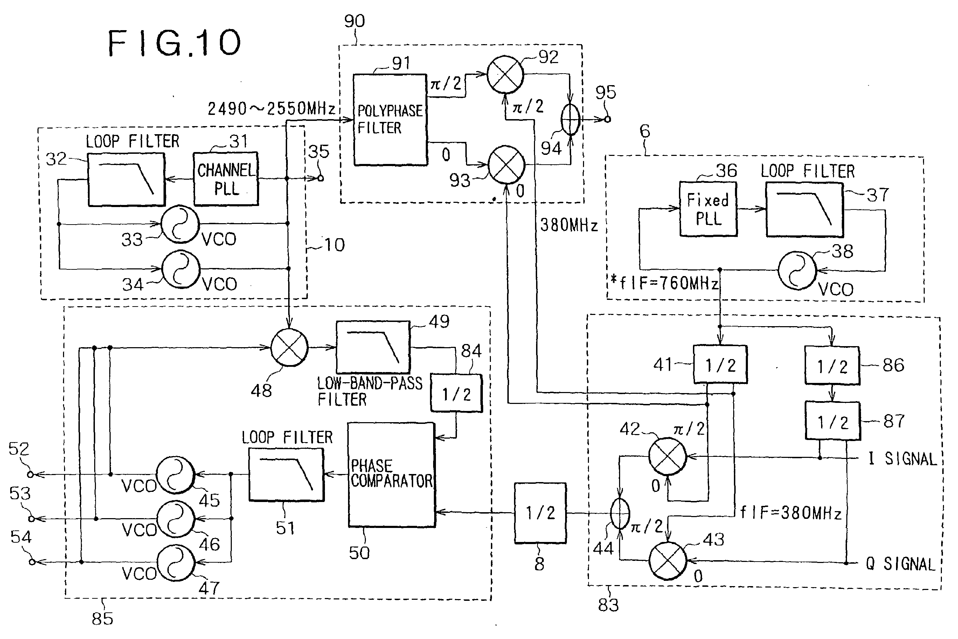

FIG. 10 is a block diagram showing the circuit of a PLL system for determining a transmission frequency and a reception local oscillation frequency which are used by the multi-band-radio-signal-transmitting & receiving apparatus 80 for transmission and reception respectively.

The PLL-system circuit employed in the multi-band-radio-signal-transmitting & receiving apparatus 80 is much different from the PLL-system circuit employed in the multi-band-radio-signal-transmitting & receiving apparatus 1 shown in FIG. 6 in that, in the case of the PLL-system circuit employed in the multi-band-radio-signal-transmitting & receiving apparatus 80, as described above, an image-eliminating mixer unit 90 for reducing a DC offset generated in the WCDMA mode is added between the channel PLL loop unit 10 and the WCDMA LNA + orthogonal-modulation unit 20 connected through a terminal 95. The image-eliminating mixer unit 90 is also connected to the GSM/DCS orthogonal-modulation unit 83. In addition, the switch 7 shown in FIG. 6 is no longer required. Furthermore, the GSM/DCS orthogonal-modulation unit 83 is used in place of the GSM/DCS orthogonal-modulation unit 5 so that the internal configuration of the offset PLL loop unit 85 is different from that shown in FIG. 6. Oscillation frequencies of the PLL-system circuit employed in the multi-band-radio-signal-transmitting & receiving apparatus 80 for all modes are shown in Table 2.

**[Table 2]**

| Communication mode | Transmission frequency band (TX) [MHz] | Reception frequency band (RX) [MHz] | VCOs for RX/TX | Oscillation frequencies of RX-VCO / TX-VCO [MHz] | Division rate of reception local oscillation | IF-VCO (VCO 38) oscillation frequency [MHz] |
|---|---|---|---|---|---|---|
| GSM | 880-915 | 925-960 | VCO33 /VCO45 | 1387.5-1440 /1260-1295 | 2/3 | 760 |
| DCS | 1710-1785 | 1805-1880 | VCO33 /VCO46 | 1353.75-1410 /1330-1405 | 4/3 | 760 |
| WCDMA | 1920-1980 | 2110-2170 | VCO34 /VCO47 | 2490-2550 /1920-1980 | 380MHz | 760 |

In the WCDMA mode, the channel PLL loop unit 10 operates in such a way that the oscillation frequency range of the VCO 34 is 2,490 MHz to 2,550 MHz. A signal output by the VCO 34 is supplied to the image-eliminating mixer unit 90. In the GSM mode, transmission reference oscillation frequencies fL0_TX_G ranging from 1,260 MHz to 1,295 MHz are generated during transmission and reception reference oscillation frequencies fL0_RX_G ranging from 1,387.5 MHz to 1,440 MHz are generated during reception. In the DCS mode, on the other hand, transmission reference oscillation frequencies fL0_TX_D ranging from 1,330 MHz to 1,405 MHz are generated during transmission and reception reference oscillation frequencies fL0_RX_D ranging from 1,353.75 MHz to 1,410 MHz are generated during reception.

The image-eliminating mixer unit 90 includes a poly-phase filter 91, a first frequency divider 92, a second frequency divider 93 and an adder 94. In a WCDMA operation, a signal with an oscillation frequency in the range of 2,490 MHz to 2,550 MHz from the VCO 34 for WCDMA use, is converted by the poly-phase filter 91 into two mutually orthogonal signals each having a divided frequency. The two mutually orthogonal signals are supplied to the first frequency divider 92 and the second frequency divider 93 respectively. Respectively, the first frequency divider 92 and the second frequency divider 93 also receive mutually orthogonal IF signals each having a frequency of 380-MHz. Mixed signals output by the first frequency divider 92 and the second frequency divider 93 are supplied to the adder 94.

The GSM/DCS orthogonal-modulation unit 83 includes a first frequency divider 41, a first mixer 42, a second mixer 43 and an adder 44 in addition to a second frequency divider 86 and a third frequency divider 87. An intermediate frequency (IF) of 760 MHz generated by the fixed PLL loop unit 6 is divided by 2 in the first frequency divider 41 so as to give give mutually orthogonal 380-MHz signals which are supplied to respectively the first mixer 42 and the second mixer 43 as well as respectively the first frequency divider 92 and the second frequency divider 93 of the image-eliminating mixer unit 90. In the GSM and DCS modes, the two mutually orthogonal 380-MHz signals are mixed by the first mixer 42 and the second mixer 43 with I and Q signals respectively to produce an orthogonal-modulation signal. In the WCDMA mode, on the other hand, the intermediate frequency (IF) of 760 MHz generated by the fixed PLL loop unit 6 is divided by 4 by the second frequency divider 86 and the third frequency divider 87, which are employed in the GSM/DCS orthogonal-modulation unit 83, so as to give mutually orthogonal 190-MHz signals. The mutually orthogonal 190-MHz signals are then each mixed with the IF signal having a divided frequency of 380-MHz in the first mixer 42 and the second mixer 43 respectively. At that time, by properly setting a phase relation between the two frequency signals supplied to the first mixer 42 and the second mixer 43, the GSM/DCS orthogonal-modulation unit 83 can be operated as an image-removing mixer at an output frequency equal to (1 / 2) * the output frequency of the VCO 38 + (1/4) X the output frequency of the VCO 38 = (3/4) X the output frequency of the VCO 38 = 570 MHz. This signal is supplied to the frequency divider 8 for dividing the frequency of the signal by 2 to produce a signal with a frequency of 285 MHz. The signal with a frequency of 285 MHz is then supplied to a phase comparator 50 employed in the offset PLL loop unit 85.

The offset PLL loop unit 85 includes a GSM VCO 45, a DCS VCO 46, a WCDMA VCO 47, a mixer 48, an LPF (Low-Pass Filter) 49, the phase comparator 50, a loop filter 51 and a frequency divider 84.

A signal output by the WCDMA VCO 47 is supplied to the mixer 48. A signal output by the VCO 34 employed in the channel PLL loop unit 10 is also supplied to the mixer 48 through another input terminal of the mixer 48. A mixed signal output by the mixer 48 is then supplied to the LPF 49 to be filtered. A signal output by the LPF 49 is then supplied to the frequency divider 84 for dividing the frequency of the signal by 2. Thus, in the offset PLL loop unit 85, a signal output by the frequency divider 84 is then supplied to the phase comparator 50 for converging the frequency of the signal to 285 MHz. These operations are equivalent to operations to converge frequencies of signals inputs to the frequency divider 84 and the frequency divider 8 to 570 MHz. Therefore, the following equation holds true: the oscillation frequency of the VCO 34 - the oscillation frequency of the WCDMA VCO 47 = 570 MHz (= (3/4) X the output frequency of the VCO 38). Thus, the oscillation frequency of the WCDMA VCO 47 = the oscillation frequency of the VCO 34 - 570 MHz = (2,490 MHz to 2,550 MHz) - 570 MHz = 1,920 MHz to 1,980 MHz. This frequency range matches the transmission frequency band for the WCDMA use.

In the GSM and DCS modes, the power supplies of the second frequency divider 86 and the third frequency divider 87, which are employed in the GSM/DCS orthogonal-modulation unit 83, are tuned off for separation from the IQ signals coming from the base band of the GSM system. In the WCDMA mode, on the other hand, the power supplies of the second frequency divider 86 and the third frequency divider 87 are tuned on to carry out the operation described above. At that time, control is executed to supply a DC voltage as a DC bias of the first mixer 42 and the second mixer 43 instead of the IQ signals.

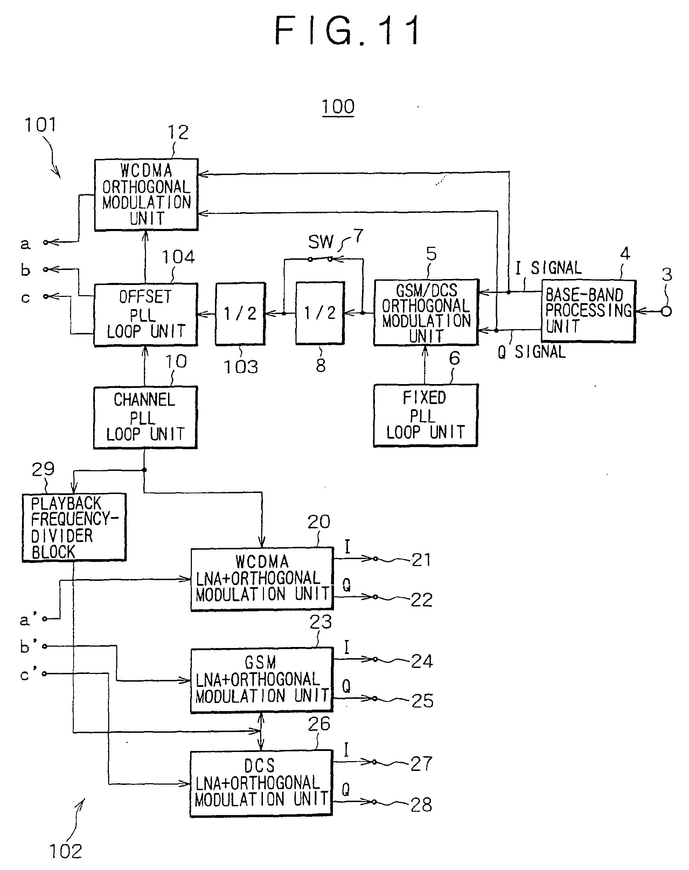

Next, a third embodiment of the present invention is described. The third embodiment is also a result of melting a TDMA system used in GSM as well as DCS terminals and a CDMA system used in a WCDMA terminal. The third embodiment can thus be used as a multi-band system terminal supporting services rendered by the 2 systems. FIG. 11 is a block diagram showing a configuration of main components constituting a multi-band-radio-signal-transmitting & receiving apparatus 100. The multi-band-radio-signal-transmitting & receiving apparatus 100 is different from the first embodiment in that, in the multi-band-radio-signal-transmitting & receiving apparatus 100, frequencies handled by a phase comparator employed in the offset PLL loop unit 104 are lower than the first embodiment.

The multi-band-radio-signal-transmitting & receiving apparatus 100 is also used in the three modes, namely, the GSM/DCS and WCDMA modes. For this reason, the multi-band-radio-signal-transmitting & receiving apparatus 100 is provided with a transmission-signal-processing unit 101 and a received-signal-processing unit 102 as shown in FIG. 11.

First of all, the transmission-signal-processing unit 101 is described. To be more specific, only peripherals of a configuration different from the transmission-signal-processing unit 2 employed in the multi-band-radio-signal-transmitting & receiving apparatus 1 shown in FIG. 4 are explained. Transmission data received through an input terminal 3 is supplied to a base-band processing unit 4 employed in the transmission-signal-processing unit 101. The base-band processing unit 4 converts the transmission data into I and Q signals orthogonal to each other. The I and Q signals are supplied to a GSM/DCS orthogonal-modulation unit 5. In the GSM and DCS modes, the GSM/DCS orthogonal-modulation unit 5 operates in a way different from that in the WCDMA mode. To be more specific, in the GSM and DCS modes, the intermediate frequency (IF) of 760 MHz generated by the fixed PLL loop unit 6 is divided by 2 so as to give two mutually orthogonal 380-MHz signals which are then mixed with the I and Q signals respectively to produce an orthogonal-modulation signal. The orthogonal-modulation signal is synthesized by an adder 44 before being supplied to a frequency divider 103 by way of the switch 7 which has been turned on. The frequency divider 8 divides the frequency of the orthogonal-modulation signal by 2 to generate a signal with a frequency of 190 MHz. The signal with a frequency of 190 MHz is then supplied to the frequency divider 103 for dividing the frequency of 190 MHz by 2 to generate a signal with a frequency of 95 MHz. The signal with a frequency of 95 MHz is then supplied to a phase comparator 50 employed in the offset PLL loop unit 104. In the WCDMA mode, on the other hand, the GSM/DCS orthogonal-modulation unit 5 amplifies only the 380-MHz divided-frequency signal and supplies the amplified signal to the frequency divider 8. The frequency divider 8 divides the frequency of the 380-MHz IF signal by 2 to produce a signal with a frequency of 190 MHz. The signal with a frequency of 190 MHz is then supplied to the frequency divider 103 for dividing the frequency of 190 MHz by 2 to generate a signal with a frequency of 95 MHz. The signal with a frequency of 95 MHz is then supplied to a phase comparator 50 employed in the offset PLL loop unit 104.

In the GSM and DCS modes, the offset PLL loop unit 104 uses the 190-MHz orthogonal-modulation signal received from the switch 7 by way of the frequency divider 103 to generate a transmission oscillation signal fTX_G for GSM use in a band of 900 MHz and a transmission oscillation signal fTX_D for DCS use in a band of 1,800 MHz. The transmission oscillation signal fTX_G for GSM use in a band of 900 MHz and the transmission oscillation signal fTX_D for DCS use in a band of 1,800 MHz are supplied to output terminals b and c respectively. At that time, the offset PLL loop unit 104 receives a transmission local oscillation signal fL0_TX_G for GSM use and a transmission oscillation signal fL0_TX_D for DCS use from the channel PLL loop unit 10.

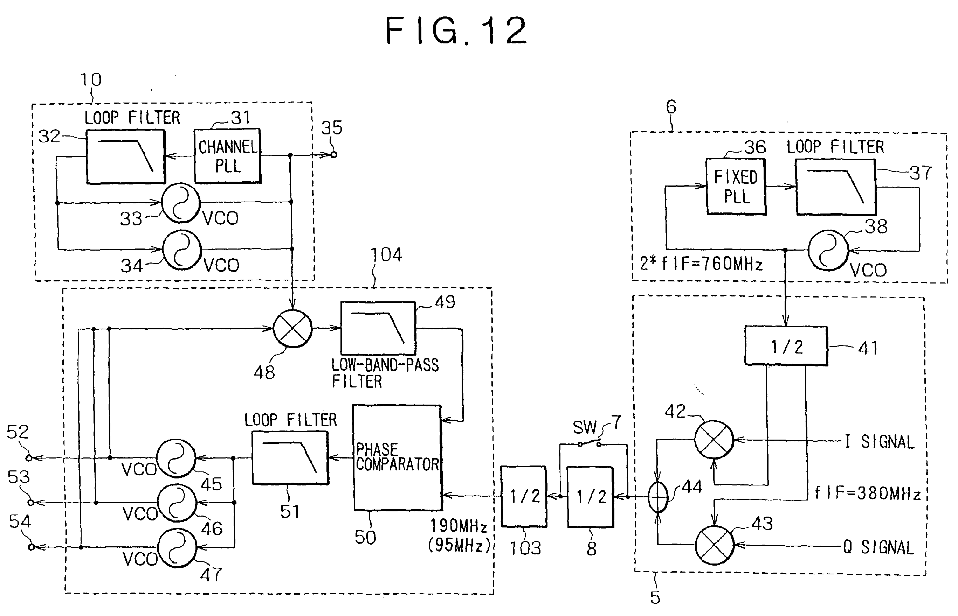

In the WCDMA mode, on the other hand, the offset PLL loop unit 104 uses a WCDMA 95-MHz signal received from the GSM/DCS orthogonal-modulation unit 5 through the frequency divider 8 and the frequency divider 103 to generate a transmission signal having a transmission oscillation frequency fTX_W in a band of 1,900 MHz. The transmission signal with the 1900-MHz band transmission oscillation frequency fTX_W is supplied to the WCDMA orthogonal-modulation unit 12 through a terminal 54 shown in FIG. 12. The WCDMA orthogonal-modulation unit 12 generates a WCDMA transmission oscillation frequency fTX_W supplied to an output terminal a.

The transmission oscillation signals appearing at the output terminals a, b and c are supplied to a VCO, a BPF, a PA, a duplexer and switches to be eventually radiated to the air by an antenna as an RF signal in the same way as the embodiment shown in FIG. 4.

Since the configuration and the operation of the received-signal-processing unit 102 are identical with those of the received-signal-processing unit 19 shown in FIG. 4, their descriptions are not repeated.

FIG. 12 is a block diagram showing the circuit of a PLL system determining for a reception local oscillation frequency and a transmission frequency used by the multi-band-radio-signal-transmitting & receiving apparatus 100 for transmission and reception.

The PLL-system circuit employed in the multi-band-radio-signal-transmitting & receiving apparatus 100 is much different from the PLL-system circuit employed in the multi-band-radio-signal-transmitting & receiving apparatus 1 shown in FIG. 6 in that, in the case of the PLL-system circuit employed in the multi-band-radio-signal-transmitting & receiving apparatus 100, frequencies handled by the phase comparator 50 employed in the offset PLL loop unit 104 are lower than those handled by the first embodiment as described above. In order to lower the frequencies, the frequency divider 103 is provided at a stage following the frequency divider 8, and the offset PLL loop unit 104 is provided with a frequency divider 105 at a stage following the LPF 49.

The following describes operations carried out by the PLL-system circuit employed in the multi-band-radio-signal-transmitting & receiving apparatus 100 in the GSM/DCS and WCDMA modes by referring to Table 3.

**[Table 3]**

| Communication mode | Transmission frequency band (TX) [MHz] | Reception frequency band (RX) [MHz] | VCOs for RX/TX | Oscillation frequencies of RX-VCO / TX-VCO [MHz] | Division rate of reception local oscillation | IF-VCO (VCO 38) oscillation frequency [MHz] |
|---|---|---|---|---|---|---|
| GSM | 880-915 | 925-960 | VCO33/VCO45 | 1387.5-1440/1260-1295 | 2/3 | 760 |
| DCS | 1710-1785 | 1805-1880 | VCO33/VCO46 | 1353.75-1410/1330-1405 | 4/3 | 760 |
| WCDMA | 1920-1980 | 2110-2170 | VCO34/VCO47 | 2110-2170/1920-1980 | 1 | 760 |

First of all, an operation carried out in the GSM mode is described. In the GSM mode, the channel PLL loop unit 10 of this embodiment generates transmission oscillation frequencies fL0_TX_G in the range of 1,260 MHz to 1,295 MHz during transmission and reception oscillation frequencies fL0_RX_G in the range of 1,387.5 MHz to 1,440 MHz during reception.

In the mean time, the fixed PLL loop unit 6 having the VCO 38 generates a signal with an IF of 760 MHz (2 * fIF = 760 MHz) and supplies the signal to the GSM/DCS orthogonal-modulation unit 5.

In the GSM/DCS orthogonal-modulation unit 5 the frequency divider 41 splits the 760-MHz IF signal received from the fixed PLL loop unit 6 into two 380-MHz mutually orthogonal IF signals which are then supplied to the first mixer 42 and the second mixer 43 respectively. The first mixer 42 and the second mixer 43 also receive IQ base-band signals from the base-band processing unit 4, carrying out orthogonal modulation based on the IQ base-band signals on the two 380-MHz mutually orthogonal IF signals. Signals output by the first mixer 42 and the second mixer 43 are supplied to the adder 44 employed in the GSM/DCS orthogonal-modulation unit 5. A signal output by the adder 44 is supplied by way of the switch 7 to the frequency divider 103 for dividing the frequency of the signal by 2. A signal generated by the frequency divider 103 at a frequency of 190 MHz is then supplied to the phase comparator 50 employed in the offset PLL loop unit 104.

In the offset PLL loop unit 104, the oscillation frequency of the first VCO 45 is converged to a value equal to the oscillation frequency of the VCO 33 minus half the oscillation frequency of the VCO 38. Thus, the oscillation frequency TX of the first VCO 45 oscillates in the range (1,260 - 380) MHz to (1,295 - 380) MHz = 880 MHz to 915 MHz. Frequencies in this range are equal to GSM transmission frequencies. Since the 190-MHz orthogonal-modulation signal supplied to the phase comparator 50 conveys information on IQ phases, the first VCO 45 is also subjected to phase modulation based on the information on IQ phases to allow a GSM transmission signal to be directly obtained from GMSK modulation. During reception, the channel PLL loop unit 10 is controlled so that the oscillation frequency (fL0_RX_G) of the VCO 33 for GSM/DCS use is adjusted to a value in the range of 1,387.5 MHz to 1,440 MHz. By multiplying this range by 2/3, it is possible to obtain a range 925 MHz to 960 MHz, that is, a reception local oscillation frequency fL0_RX_G = (2/3) X the oscillation frequency fL0_RX_G. Since this signal has a frequency equal to a reception frequency, the frequency can be used as a local oscillation frequency of a DCR (direct conversion receiver).

Next, an operation carried out at the DCS mode is described. In the DCS mode, the channel PLL loop unit 10 employed in this embodiment generates a transmission reference oscillation frequency fL0_TX_D in the range of 1,330 MHz to 1,405 MHz during transmission and a reception reference oscillation frequency fL0_RX_D in the range of 1,353.75 MHz to 1,410 MHz during reception.

In the GSM/DCS orthogonal-modulation unit 5, the frequency divider 41 converts the 760-MHz IF signal generated by the fixed PLL loop unit 6 into two mutually orthogonal signals each having an IF of 380-MHZ. The two mutually orthogonal signals are supplied to the first mixer 42 and the second mixer 43 respectively. The first mixer 42 and the second mixer 43 also receive IQ base-band signals from the base-band processing unit 4. The first mixer 42 and the second mixer 43 carry out orthogonal modulation by mixing the mutually orthogonal signals each having an IF of 380-MHZ with the IQ base-band signals supplied by the base-band processing unit 4. Signals output by the first mixer 42 and the second mixer 43 are synthesized by the adder 44. The GSM/DCS orthogonal-modulation unit 5 supplies an orthogonal-modulation output to the offset PLL loop unit 104 by way of the switch 7 and the frequency divider 103 for dividing the frequency of the orthogonal-modulation output by 2.

In the offset PLL loop unit 104, the oscillation frequency of the second VCO 46 is converged to a value equal to the oscillation frequency of the VCO 33 plus half the oscillation frequency of the VCO 38. Thus, the oscillation frequency of the second VCO 46 oscillates in the range of (1,330 + 380) MHz to (1,405 + 380) MHz = 1,710 MHz to 1,785 MHz. Frequencies in this range are equal to DCS transmission frequencies.

It should be noted that the polarity of the phase comparator 50 at that time needs to be set at a state opposite to that in the GSM mode. In addition, the IQ base-band signals are supplied to the GSM/DCS orthogonal-modulation unit 5 as described above and the IF of 380 MHz generated by the VCO 38 is divided by 2 prior to orthogonal modulation. Since the 190-MHz IF signal supplied to the phase comparator 50 conveys information on IQ phases, the second VCO 46 is also subjected to phase modulation based on the information on IQ phases to allow a DCS transmission signal to be directly obtained from GMSK modulation.

During reception, the channel PLL loop unit 10 is controlled so that the reception reference oscillation frequency fL0_RX_D of the VCO 33 is adjusted to a value in the range of 1,353.75 MHz to 1,410 MHz. By multiplying this range by 4/3, it is possible to obtain a range of 1,805 MHz to 1,880 MHz, that is, a reception local oscillation frequency = (4/3) X the oscillation frequency fL0_RX_D. Since this signal has a frequency equal to a reception frequency, the frequency can be used as a local oscillation frequency of a direct conversion receiver.

Next, the operation carried out in the WCDMA mode is described. As VCOs, the offset PLL loop unit 9 and the channel PLL loop unit 10 use the VCO 47 and the VCO 34 respectively. On the other hand, the fixed PLL loop unit 6 uses the VCO 38 which is also used in the GSM and DCS modes. The oscillation frequency of the VCO 38 in the WCDMA mode is also set at 760 MHz.

In the embodiment shown in FIG. 12, the channel PLL loop unit 10 is controlled so that the VCO 34 for WCDMA use oscillates in the same band as the range of 2,110 MHz to 2,170 MHz, which is a range of WCDMA reception frequencies, so as to give a local oscillation frequency fL0_RX_W for DCR (direct conversion receiver) use. In the mean time, the frequency of 760 MHz generated by the fixed PLL loop unit 6 is divided by 2 by the frequency divider 41 employed in the GSM/DCS orthogonal-modulation unit 5 so as to give two mutually orthogonal signals which are then supplied to the first mixer 42 and the second mixer 43 respectively. At that time, however, WCDMA base-band signals are not supplied to the first mixer 42 and the second mixer 43 as IQ inputs as is the case with the GSM and DCS modes. Instead, DC voltages are supplied to the first mixer 42 and the second mixer 43. To be more specific, an appropriate DC electric potential is applied to one of differential I inputs. On the other hand, a 0-V DC electric potential is applied to the other differential I input and the Q input. In this way, the first mixer 42 does not work as a mixer. Instead, the first mixer 42 functions as a cascade amplifier while the second mixer 43 does not operate but is put in an OFF state. As another method, control can also be executed to turn off the power supplies of the frequency divider 41 and the second mixer 43 so as to halt the operation of the second mixer 43.

As described above, in the WCDMA mode, the first mixer 42 outputs the frequency of 380-MHz obtained as a result of division of a frequency generated by the fixed PLL loop unit 6 by 2 without frequency transformation. The frequency of 380-MHz is further divided by 2 by the frequency divider 8 to give a reference frequency of 190 MHz which is then supplied to the frequency divider 103. The frequency of 190 MHz is further divided by 2 by the frequency divider 103 to give a reference frequency of 95 MHz which is then supplied to the phase comparator 50 employed in the offset PLL loop unit 104.

In the offset PLL loop unit 104, on the other hand, the oscillation signal generated by the VCO 47 for WCDMA use is mixed by the mixer 48 with the oscillation signal generated by the VCO 34 to give a frequency equal to a difference obtained as a result of subtraction of the oscillation frequency of the VCO 47 from the oscillation frequency of the VCO 34. The difference-frequency signal output by the mixer 48 is filtered by the LPF 49 before being supplied to a frequency divider 105 for dividing the frequency of the signal by 2. A signal output by the frequency divider 105 is supplied to the phase comparator 50 to be compared with the signal with the frequency of 95 MHz. Thus, the loop converges the oscillation frequency of the VCO 47 to a value equal to a difference obtained as a result of subtraction of 190 MHz from the oscillation frequency of the VCO 34. That is to say, the oscillation frequency of the VCO 34 varies in the range of (2,110 - 190) MHz to (2,170 - 190) MHz = 1,920 MHz to 1,980 MHz. This range is equal to the WCDMA transmission frequency band. Thus, by connecting the WCDMA orthogonal-modulation unit 12 to the output of the VCO 47 shown in FIG. 12 as illustrated in FIG. 11 in order to carry out modulation by the WCDMA IQ signals, a WCDMA transmission signal can be obtained.

As described above, in the multi-band-radio-signal-transmitting & receiving apparatus 100, frequencies handled by the phase comparator 50 employed in the offset PLL loop unit 104 are lowered to improve the comparison processing.

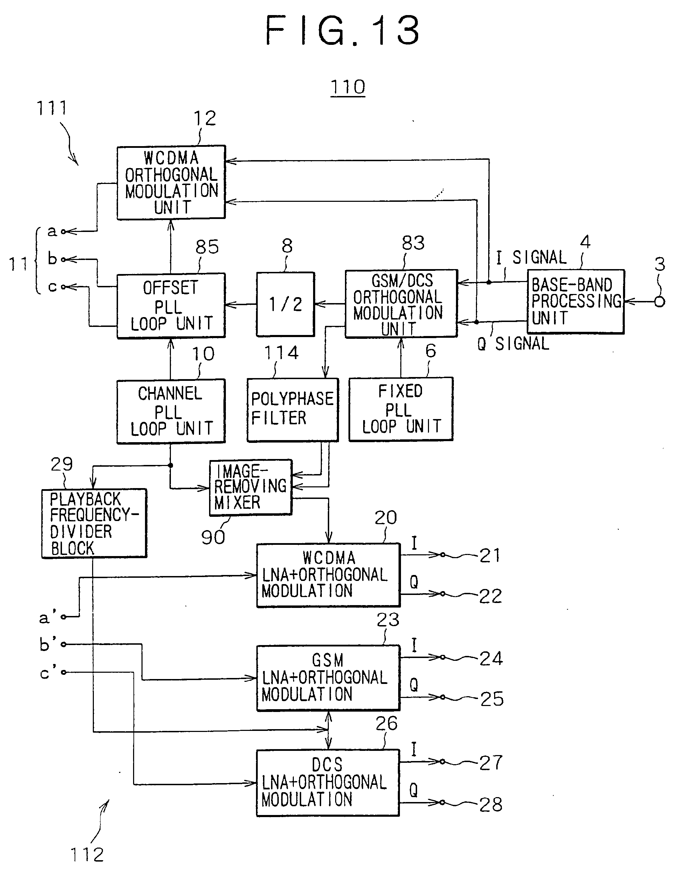

Next, a fourth embodiment of the present invention is described. The fourth embodiment is also a result of melting a TDMA system used in GSM as well as DCS terminals and a CDMA system used in a WCDMA terminal. The fourth embodiment can thus be used as a multi-band system terminal supporting services rendered by the two systems. FIG. 13 is a block diagram showing a configuration of main components constituting a multi-band-radio-signal-transmitting & receiving apparatus 110. In comparison with the first to third embodiments, the fourth embodiment is characterized in that, in the first place, frequencies generated by the channel PLL loop unit 113 for the WCDMA mode are equal to the WCDMA reception frequency minus the frequency of the fixed PLL loop unit 6 = (2,110 to 2,170) MHz - 760 MHz = 1,350 MHz to 1,410 MHz and, in the second place, a VCO used in the channel PLL loop unit 113 is capable of supporting all the systems. While the multi-band-radio-signal-transmitting & receiving apparatus 110 includes the additional image-removing mixer unit 90 for reducing a DC offset generated in the WCDMA mode much like the multi-band-radio-signal-transmitting & receiving apparatus 80 of the second embodiment, the multi-band-radio-signal-transmitting & receiving apparatus 110 is also characterized in that a polyphase filter 114 is provided between the GSM/DCS orthogonal-modulation unit 83 and the image-eliminating mixer unit 90.

The multi-band-radio-signal-transmitting & receiving apparatus 110 is also used in the three modes, namely, the GSM/DCS and WCDMA modes. For this reason, the multi-band-radio-signal-transmitting & receiving apparatus 110 is provided with a transmission-signal-processing unit 111 and a received-signal-processing unit 112 as shown in FIG. 13.

First of all, the transmission-signal-processing unit 111 is described. In the following description, differences in configuration from the transmission-signal-processing unit 81 employed in the multi-band-radio-signal-transmitting & receiving apparatus 80 shown in FIG. 9 are described in detail and configuration similarities are described only briefly. Transmission data received through an input terminal 3 is supplied to a base-band processing unit 4. The base-band processing unit 4 converts the transmission data into I and Q signals orthogonal to each other. The I and Q signals are supplied to a GSM/DCS orthogonal-modulation unit 83. In the GSM and DCS modes, the GSM/DCS orthogonal-modulation unit 83 operates in a way different from that in the WCDMA mode. To be more specific, in the GSM and DCS modes, the two mutually orthogonal 380-MHz signals are mixed with the I and Q signals respectively to produce an orthogonal-modulation signal. In the WCDMA mode, on the other hand, as a result, an IF signal with a frequency of 570 MHz is generated and supplied to the frequency divider 8.

In the GSM and DCS modes, a GSM/DCS orthogonal-modulation signal with a frequency of 380 MHz is supplied to the frequency divider 8 which divides the frequency of the signal by 2 to result in a frequency of 190 MHz. A GSM/DCS orthogonal-modulation signal with the frequency of 190 MHz is then supplied to the offset PLL loop unit 85 which uses the signal to generate a transmission oscillation signal fTX_G in the image-eliminating mixer unit 900-MHz band for GSM use and a transmission oscillation signal fTX_D in the 1,800-MHz band for DCS use. The transmission oscillation signal fTX_G and the transmission oscillation signal fTX_D are supplied to terminals b and c of a switch 11, respectively. At that time, the offset PLL loop unit 85 also receives a transmission local oscillation signal fL0_TX_G for GSM use and a transmission local oscillation signal f10_TX_D for DCS use from a single VCO to be described later. This VCO is provided in the channel PLL loop unit 113 to serve as a VCO common to the GSM/DCS and WCDMA modes.

In the WCDMA mode, on the other hand, the offset PLL loop unit 85 uses a WCDMA frequency of 285 MHz received from the frequency divider 8 to generate a transmission oscillation signal fTX_W in the 1,900-MHz band. The transmission oscillation signal fTX_W is supplied to the WCDMA orthogonal-modulation unit 12 which generates a transmission oscillation signal fTX_W for WCDMA use and supplies the transmission oscillation signal fTX_W to a terminal a of the switch 11. At that time, the offset PLL loop unit 85 also receives a transmission local oscillation signal for WCDMA use from the single VCO provided in the channel PLL loop unit 113 as described above.

Next, the received-signal-processing unit 112 is described briefly. Much like the received-signal-processing unit 82 shown in FIG. 9, in the received-signal-processing unit 112, the additional image-removing mixer unit 90 is provided between the channel PLL loop unit 113 and the WCDMA LNA + orthogonal-modulation unit 20. The received-signal-processing unit 112 is different from the received-signal-processing unit 82, however, in that the received-signal-processing unit 112 also includes a poly-phase filter 114 between the image-eliminating mixer unit 90 and the GSM/DCS orthogonal-modulation unit 83. Since the rest of the configuration of the received-signal-processing unit 112 is identical with that of the received-signal-processing unit 82, its description is not repeated.

First of all, features of the whole operation of the received-signal-processing unit 112 are described briefly. An input terminal a, b or c is used for receiving an RF signal when the multi-band-radio-signal-transmitting & receiving apparatus 110 is used in the WCDMA, GSM or DCS mode respectively. When the multi-band-radio-signal-transmitting & receiving apparatus 110 is used in the WCDMA mode, a received WCDMA signal is amplified by an LNA employed in the WCDMA LNA + orthogonal-modulation unit 20. Then, a BPF output in the WCDMA LNA + orthogonal-modulation unit 20 is demodulated by using a reception local oscillation signal fL0_RX_W with a DC component thereof reduced by the image-eliminating mixer unit 90 to generate an in-phase signal (I signal) and an orthogonal signal (Q signal) which are supplied to output terminals 21 and 22 respectively. Operations carried out by the multi-band-radio-signal-transmitting & receiving apparatus 110 in the GSM and DCS modes are not described.

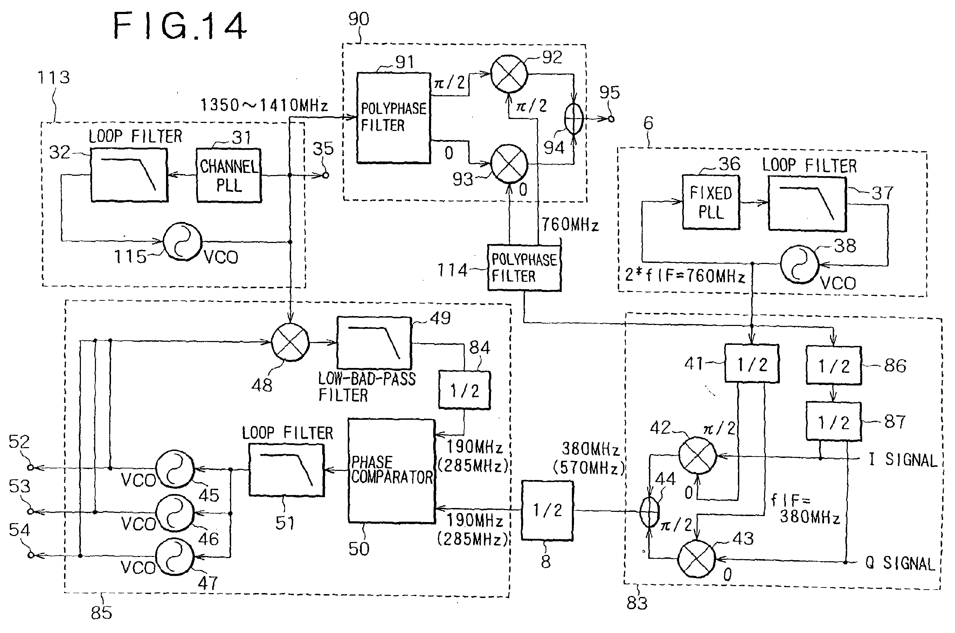

FIG. 14 is a block diagram showing the circuit of a PLL system for determining a transmission frequency and a reception local oscillation frequency which are used by the multi-band-radio-signal-transmitting & receiving apparatus 110 for transmission and reception respectively.

The PLL-system circuit employed in the multi-band-radio-signal-transmitting & receiving apparatus 110 is much different from the PLL-system circuit employed in the multi-band-radio-signal-transmitting & receiving apparatus 80 shown in FIG. 10 in that, in the case of the PLL-system circuit employed in the multi-band-radio-signal-transmitting & receiving apparatus 110, as described above, in the first place, the multi-band-radio-signal-transmitting & receiving apparatus 110 is also characterized in that a polyphase filter 114 is provided between the GSM/DCS orthogonal-modulation unit 83 and the image-eliminating mixer unit 90 and, in the second place, the VCO used in the channel PLL loop unit 113 severs as a VCO common to the GSM/DCS and WCDMA modes. Oscillation frequencies of the PLL-system circuit employed in the multi-band-radio-signal-transmitting & receiving apparatus 80 for all modes are shown in Table 4.

**[Table 4]**

| Communication mode | Transmission frequency band (TX) [MHz] | Reception frequency band (RX) [MHz] | VCOs for RX/TX | Oscillation frequencies of RX-VCO / TX-VCO [MHz] | Division rate of reception local oscillation | IF-VCO (VCO 38) oscillation frequency [MHz) |
|---|---|---|---|---|---|---|
| GSM | 880-915 | 925-960 | VCO115/VCO45 | 1387.5-1440 /1260-1295 | 2/3 | 760 |
| DCS | 1710-1785 | 1805-1880 | VCO115/VCO46 | 1353.75-1410 /1330-1405 | 4/3 | 760 |
| WCDMA | 1920-1980 | 2110-2170 | VCO115/VCO47 | 2110-2170 /1920-1980 | 760MHz | 760 |

The channel PLL loop unit 113 includes a channel PLL 31, a loop filter 32 and the common VCO 115 described above. The common VCO 115 is capable of generating local oscillation frequencies required for all modes, namely, the GSM/DCS and WCDMA modes.

To be more specific, in the GSM mode, the channel PLL loop unit 113 generates transmission oscillation frequencies fL0_TX_G in the range of 1,260 MHz to 1,295 MHz during transmission and reception oscillation frequencies fL0_RX_G in the range 1,387.5 MHz to 1,440 MHz during reception. In the DCS mode, the channel PLL loop unit 113 generates a transmission reference oscillation frequency fL0_TX_D in the range of 1,330 MHz to 1,405 MHz during transmission and a reception reference oscillation frequency fL0_RX_D in the range of 1,353.75 MHz to 1,410 MHz during reception. In the WCDMA mode, the channel PLL loop unit 113 generates an oscillation frequency in the range 1,350 MHz to 1410 MHz during reception.

During a reception in the WCDMA mode, a 760-MHz IF signal output by the fixed PLL loop unit 6 is supplied directly to the poly-phase filter 114 for converting the IF signal into two mutually orthogonal 760-MHz signals which are supplied to respectively first and second mixers 92 and 93 employed in the image-eliminating mixer unit 90 for eventually generating a local oscillation frequency for DCR use. The image-eliminating mixer unit 90 also receives a signal with a frequency in the range 1,350 MHz to 1,410 MHz. In the image-eliminating mixer unit 90, a poly-phase filter 91 converts the signal with a frequency in the range 1,350 MHz to 1,410 MHz into two mutually orthogonal 760-MHz signals that are supplied to the first and second mixers 92 and 93 respectively. By properly setting the phase relationship between the two signals supplied to the first mixer 92 and properly setting the phase relationship between the two signals supplied to the second mixer 93, the image-eliminating mixer unit 90 is capable of generating a WCDMA reception frequency in the range of (1,350 to 1,410) MHz + 760 MHz = 2,110 MHz to 2,170 MHz.

During a transmission in the WCDMA mode, on the other hand, control is executed in such a way that the output frequency of the offset PLL loop unit 85 is converged to 570 MHz (= the oscillation frequency of the VCO 47 minus the oscillation frequency of the common VCO 115). Thus, the VCO 47 generates an oscillation frequency in the range of 570 MHz + (1,350 to 1,410) MHz = 1,920 MHz to 1,980 MHz. It should be noted that the polarity of the phase comparator is set in a state opposite to that of the embodiment shown in FIG. 10. Operations carried out in the GSM and DCS modes are identical with those explained earlier by referring to FIG. 10.

It should be noted that the present invention can also be applied to generation of local oscillation signals by setting the oscillation frequency of the VCO employed in each PLL at a local oscillation frequency for an RF application in a heterodyne receiver with a configuration other than the DCR configurations like the ones shown in FIGS. 6, 10, 12 and 14.

While a preferred embodiment of the invention has been described using specific terms, such description is for illustrative purposes only, and it is to be understood that changes and variations may be made without departing from the scope of the following claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A multi-band transmission & reception-signal-generating apparatus for generating signals for transmission and reception of a multi-band used in a first communication system for handling transmission signals each modulated by using information on phases only, and a second communication system for handling transmission signals each modulated by using information also on amplitude components, said multi-band transmission & reception-signal-generating apparatus comprising:
constant-frequency-signal-generating means for generating a signal with a constant frequency;
transmission & reception-reference-oscillation-signal-generating means for generating a reception-reference-oscillation signal for generating a reception local oscillation signal for demodulation of a signal received by said first communication system in said first communication system and demodulation of a signal received by said second communication system in said second communication system, and a transmission-reference-oscillation signal for generating a transmission oscillation signal for transmission of a signal by said first communication system in said first communication system and transmission of a signal by said second communication system in said second communication system; and
transmission-oscillation-signal-generating means for generating a transmission oscillation signal of said first communication system and a transmission oscillation signal of said second communication system by comparison of an input reference frequency with the frequency of a reference oscillation signal generated by said transmission & reception-reference-oscillation-signal-generating means, said input reference frequency being a properly set value of the frequency of a signal generated by said constant-frequency-signal-generating means,
wherein in the case of said second communication system, said transmission & reception-reference-oscillation-signal-generating means generates a reception local oscillation signal for demodulating a signal to be transmitted by said second communication system; and said transmission-oscillation-signal-generating means generates a transmission oscillation signal of said second communication system based on said reception reference oscillation signal generated by said transmission & reception-reference-oscillation-signal-generating means.

2. A multi-band transmission & reception-signal-generating apparatus according to claim 1, further comprising first modulation means for carrying out modulation based on said first communication system using said information on phases only on two mutually orthogonal base-band signals by utilizing said signal generated by said constant-frequency-signal-generating means at said constant frequency.

3. A multi-band transmission & reception-signal-generating apparatus according to claim 2 wherein, in the case of said first communication system, said transmission-oscillation-signal-generating means generates a transmission oscillation signal of said first communication system by oscillating a voltage-controlled oscillation means provided internally and dedicated to said first communication system with a modulation output of said first modulation means used as said reference frequency input so as to converge a frequency of said voltage-controlled oscillation means to said reference frequency input.

4. A multi-band transmission & reception-signal-generating apparatus according to claim 2 wherein said first modulation means has two equilibrium mixers constituting an orthogonal-modulation unit.

5. A multi-band transmission & reception-signal-generating apparatus according to claim 4 wherein, in the case of said second communication system, a power supply of one of said two equilibrium mixers is turned off and, if a DC voltage is applied to the other equilibrium mixer with a power supply thereof turned on, said signal generated by said constant-frequency-signal-generating means at said constant frequency set at a proper value is amplified.

6. A multi-band transmission & reception-signal-generating apparatus according to claim 1 wherein said first communication system is used in a TDMA system for generating signals for transmission and reception in a plurality of bands handled in said TDMA system.

7. A multi-band transmission & reception-signal-generating apparatus according to claim 1 wherein said second communication system is used in a CDMA system for generating signals for transmission and reception in a plurality of bands handled in said CDMA system.

8. A multi-band transmission & reception-signal-generating apparatus according to claim 1 wherein, when a received signal is received by direct conversion using said reception local oscillation signal generated by said transmission & reception-reference-oscillation-signal-generating means in the case of said second communication system, an oscillation frequency generated by a voltage-controlled oscillation means provided internally in said transmission & reception-reference-oscillation-signal-generating means is made different from a reception frequency in order to remove a DC offset generated by coupling between said voltage-controlled oscillation means provided internally in said transmission & reception-reference-oscillation-signal-generating means and a circuit for carrying out reception by said direct conversion.

9. A multi-band transmission & reception-signal-generating apparatus according to claim 1, further comprising a frequency transformation means for fetching a signal with a frequency equal to a reception frequency generated by a voltage-controlled oscillation means provided internally in said transmission & reception-reference-oscillation-signal-generating means by mixing an oscillation-frequency signal having a frequency different from said reception frequency with a particular constant-frequency signal having a constant frequency thereof set at a proper value.

10. A multi-band transmission & reception-signal-generating apparatus according to claim 9 wherein said particular constant-frequency signal having a constant frequency thereof set at a proper value is said constant-frequency signal generated by said constant-frequency-signal-generating means with a constant frequency thereof set at a proper value.

11. A multi-band transmission & reception-signal-generating apparatus according to claim 9 wherein, in the case of said second communication system, said transmission-oscillation-signal-generating means compares the phase of a signal having a reference frequency with the phase of a signal generated by at said transmission & reception-reference-oscillation-signal-generating means in order to make an oscillation frequency match a transmission frequency, said signal having said reference frequency being generated by said first modulation means by multiplication of said frequency of said constant-frequency signal generated by said constant-frequency-signal-generating means by a predetermined frequency-division ratio.

12. A multi-band transmission & reception-signal-generating method for generating signals for transmission and reception of a multi-band used in a first communication system for handling transmission signals each modulated by using information on phases only; and a second communication system for handling transmission signals each modulated by using information also on amplitude components, said multi-band transmission & reception-signal-generating method comprising:
a transmission & reception-reference-oscillation-signal-generating step of generating a reception-reference-oscillation signal for generating a reception oscillation signal for demodulation of a signal received by said first communication system in said first communication system and demodulation of a signal received by said second communication system in said second communication system, and a transmission-reference-oscillation signal for generating a transmission oscillation signal for transmission of a signal by said first communication system in said first communication system and transmission of a signal by said second communication system in said second communication system; and
a transmission-oscillation-signal-generating step of generating a transmission oscillation signal of said first communication system and a transmission oscillation signal of said second communication system by comparison of an input reference frequency with the frequency of a reference oscillation signal generated by said transmission & reception-reference-oscillation-signal-generating means, said input reference frequency being a properly set value of the frequency of a signal having a constant frequency.

13. A multi-band transmission & reception-signal-generating method according to claim 12 wherein, in the case of said second communication system, a reception local oscillation signal for demodulating a reception signal of said second communication system is generated in said transmission & reception-reference-oscillation-signal-generating step and, in said transmission-oscillation-signal-generating step, a transmission oscillation signal of said second communication system is generated on the basis of said reception local oscillation signal generated in said transmission & reception-reference-oscillation-signal-generating step.

14. A multi-band-radio-signal-transmitting & receiving apparatus for generating signals for transmission and reception of a multi-band used in a first communication system for handling transmission signals each modulated by using information on phases only, and a second communication system for handling transmission signals each modulated by using information on amplitude components, said multi-band transmission & reception-signal-generating apparatus comprising:
constant-frequency-signal-generating means for generating a signal with a constant frequency;
transmission & reception-reference-oscillation-signal-generating means for generating a reception-reference-oscillation signal for generating a reception local oscillation signal for demodulation of a signal received by said first communication system in said first communication system and demodulation of a signal received by said second communication system in said second communication system, and a transmission-reference-oscillation signal for generating a transmission oscillation signal for transmission of a signal by said first communication system in said first communication system and transmission of a signal by said second communication system in said second communication system; and
transmission-oscillation-signal-generating means for generating a transmission oscillation signal of said first communication system and a transmission oscillation signal of said second communication system by comparison of an input reference frequency with the frequency of a reference oscillation signal generated by said transmission & reception-reference-oscillation-signal-generating means, said input reference frequency being a properly set value of the frequency of a signal generated by said constant-frequency-signal-generating means,
wherein in the case of said second communication system, said transmission & reception-reference-oscillation-signal-generating means generates a reception local oscillation signal for demodulating a signal to be transmitted by said second communication system; and said transmission-oscillation-signal-generating means generates a transmission oscillation signal of said second communication system based on said reception reference oscillation signal generated by said transmission & reception-reference-oscillation-signal-generating means.
